Europäisches Patentamt

(19) European Patent Office

Office européen des brevets

(11) **EP 0 718 815 A1**

(12) **EUROPEAN PATENT APPLICATION**

(43) Date of publication:
26.06.1996 Bulletin 1996/26

(51) Int Cl.6: **G09B 9/00**

(21) Application number: **95308657.6**

(22) Date of filing: **01.12.1995**

| | |
|---|---|
| (84) Designated Contracting States:<br>**DE FR GB IT NL** | • **Pogoloff, Karen L.**<br>**Maitland, Florida 32751 (US)** |
| (30) Priority: **22.12.1994 US 362213** | (74) Representative: **Jones, Michael Raymond et al**<br>**HASELTINE LAKE & CO.** |
| (71) Applicant: **CONTRAVES, INC.**<br>**Tampa, Florida 33610-4233 (US)** | **Hazlitt House**<br>**28 Southampton Buildings**<br>**Chancery Lane** |
| (72) Inventors:<br>• **Freeman, Edmund**<br>**Tampa, Florida 33647-1137 (US)** | **London WC2A 1AT (GB)** |

(54) **Fire training system**

(57)    The present invention pertains to a fire fighter trainer. The fire fighter trainer comprises a first cell and a second cell disposed adjacent to the first cell. Each cell has a burner mechanism for producing a flame and a controller which controls the burner mechanism. The burner mechanism can produce a real flame, or a virtual flame. If a virtual flame is produced, it can appear on a screen. The first cell and the second cell together form a cell matrix. If a real flame is produced, then the cell is preferably called a burn cell. If the flame produced is a virtual flame, then the cell is preferably called a virtual cell. The present invention pertains to a fire fighter trainer. The fire fighter trainer comprises a burner mechanism for producing a flame. The fire fighter trainer is also comprised of a closed loop control system for the burner mechanism. The control system is in communication with the burner mechanism. The present invention pertains to a fire fighter trainer. The fire fighter trainer comprises a burn cell matrix comprising a plurality of burner mechanisms which produce a flame. The fire fighter trainer is also comprised of a control mechanism for providing distributed control over the burner mechanisms and flame they produce and their safe operation. The control over the burner mechanism's safe operation is separate and distinct from the control over the burner mechanism and the flames they produce. The present invention pertains to a method for operating a first cell of a fire fighter trainer. The method comprises the steps of activating a controller in the first cell. Then there is the step of igniting a flame in the first cell. Next there is the step of sensing conditions about the first cell. Then there is the step of informing the controller of the conditions about the first cell. Next there is the step of informing the controller of the conditions about a second cell disposed adjacent the first cell. Next there is the step of changing the flame as a function of conditions about the first cell and the second cell. The present invention also pertains to a method of training a trainee about fire fighting. The method comprises the steps of establishing a training scenario for a fire fighter trainer. Next there is the step of introducing the trainee to the fire fighter trainer. Then there is the step of conducting a training session using the training scenario in the fire fighter trainer.

Figure 1
A Burn Cell Matrix

**Description**

FIELD OF THE INVENTION

The present invention is related to fire fighter trainers. More specifically, the present invention is related to fire fighter trainers that have distributed control over burn cells in a burn cell matrix and that have virtual cells.

BACKGROUND OF THE INVENTION

Fighting fires is a hazardous undertaking. Anything that can provide a fire fighter with training and experience to better fight fires serves to contain the hazards that can be experienced by a fire fighter. For many years, rudimentary structures in which flames were ignited have been used to give some form of training and experience to fire fighters. These early fire fighter trainers could not be customized to specific training scenarios nor could they respond to trainee actions except to be extinguished in their entirety when foam, or water, or powder was placed on them. Training scenarios could not be repeated reliably nor could fires be controlled precisely enough to adequately assess fire fighter skills yet not endanger trainees. Pollution was also a problem.

The next generation of fire fighter trainers was somewhat more sophisticated. Piping carrying a flammable yet clean-burning fluid, such as liquid or gaseous propane, was constructed into a fire fighting training area. Valving was provided that had some degree of manual control to vary the flame in response to the fire fighters' actions to suppress or extinguish the fire. In time, these manually operated fire fighter trainers had incorporated into them central computers that, through the receipt of signals from sensors, could, through motorized valves, adapt the flames to the fire fighter trainees' actions to suppress or extinguish the flame.

Today's computer-controlled fire fighter trainers still use some form of flammable fluid to provide the flame and a central operational control to receive sensor signals, operate motorized valves, and thus oversee the trainer's flame scenarios and training. The central computers do not necessarily exhibit complex reactions or scenarios to the trainees nor do they effectively take into account variables such as trainee locations, trainee behaviors, or team aspects of fighting fires. Use of a central computer is inherently inflexible both operationally as well as being difficult to modify for new training features or new training configurations.

The present invention provides, through the use of distributed control, for a fire fighter trainer that has the flexibility to vary training in complex ways and in reaction to trainee individual and team behaviors, without having to reconfigure the trainer components, the safety subsystems, or the operational programming. New training scenarios and new trainer configurations can be provided without the extensive rework required by use of central control. In addition, to further facilitate training and safety, virtual, or simulation of, fire is provided to allow a trainee to experience a greater range of problems than can be safely or economically reproduced by burning a fluid.

SUMMARY OF THE INVENTION

The present invention pertains to a fire fighter trainer. The fire fighter trainer comprises a first cell and a second cell disposed adjacent to the first cell. Each cell has a burner mechanism for producing a flame and a controller which controls the burner mechanism. The burner mechanism can produce a real flame, or a virtual flame. If a virtual flame is produced, it can appear on a screen. The first cell and the second cell together form a cell matrix. If a real flame is produced, then the cell is preferably called a burn cell. If the flame produced is a virtual flame, then the cell is preferably called a virtual cell.

The present invention pertains to a fire fighter trainer. The fire fighter trainer comprises a burn cell matrix comprising N burn cells, where $N \geq 2$ and N is an integer. Each burn cell has a burner mechanism to produce a flame, and each burn cell has a controller which is in communication with the burner mechanism and controls the flame. The fire fighter trainer can include a safety interface module in communication with the burn cell matrix for shutting off the flame in or power to the burn cell matrix. The fire fighter trainer can also include an operator interface module in communication with the burn cell matrix to initiate training sessions in the burn cell matrix and to monitor the burn cell matrix during operation.

The present invention pertains to a fire fighter trainer. The fire fighter trainer comprises a first burn cell and a second burn cell. Each burn cell has a burner mechanism which produces a flame. Each burn cell also has a sensor mechanism which senses conditions about the cell and produces one or more sensor signals corresponding to the conditions. The sensor mechanism can be comprised of one or more sensors disposed at each burn cell to sense the conditions about the cell; or the sensor mechanism can include sensors, which are adjacent to or apart from the cell or which are a part of the cell, that produce one or more sensor signals corresponding to the conditions of the cell. Each burn cell also has a controller mechanism in contact with the cell's sensor mechanism, with the controller mechanism of the other burn cell and with the cell's burner mechanism to control the flame of the cell based on the sensor signal(s) the controller mechanism receives from the cell's sensor mechanism, on signal(s) the controller mechanism receives from the other burn cell and on control algorithms in the controller mechanism of the cell. The controller mechanism of the cell produces one or more control signals to the burner mechanism, based on signals the controller mechanism receives and the predefined control logic. The fire fighter trainer is also comprised of a fuel mechanism for providing fuel to the burner mechanism to produce the flame and a power mechanism for providing power to the electronic and electrical components of the burn cell.

The present invention pertains to a fire fighter trainer. The fire fighter trainer comprises a burn cell matrix having at least one burn cell which produces a flame. Each burn cell has a status. Additionally, the fire fighter trainer is comprised of a virtual cell matrix which corresponds to the burn cell matrix. The virtual cell matrix has at least one virtual cell corresponding to each burn cell in the burn cell matrix. The virtual cell shows the status of the corresponding burn cell.

The present invention pertains to a fire fighter trainer. The fire fighter trainer comprises a virtual cell which represents a flame or represents characteristics of a flame and coordinates the representation with actions of a user. The fire fighter trainer is also comprised of an input mechanism through which the actions of the user are conveyed to the virtual cell. The input mechanism communicates with the virtual cell. The same input mechanism can communicate alternatively with several virtual cells in a multiplexed manner. The input mechanism can include a keyboard having keys and/or a pointing device having a button and/or a panel having an entry device. At least one key, button or entry device action is associated with a communication that is provided to the virtual cell that affects the representation of the cell's flame or of its characteristics. Alternatively or simultaneously, the input mechanism includes a sensor mechanism which senses conditions about the virtual cell and produces at least one sensor signal that affects the representation of the cell. The sensor mechanism communicates with the virtual cell to provide the sensor signal to the virtual cell.

The present invention pertains to a fire fighter trainer. The fire fighter trainer comprises a burner mechanism for producing a flame. The fire fighter trainer is also comprised of a closed loop control system for the burner mechanism. The control system is in communication with the burner mechanism.

The present invention pertains to a fire fighter trainer. The fire fighter trainer comprises a burn cell matrix comprising a plurality of burner mechanisms which produce a flame. The fire fighter trainer is also comprised of a control mechanism for providing distributed control over the burner mechanisms and flame they produce and their safe operation. The control over the burner mechanism's safe operation is separate and distinct from the control over the burner mechanism and the flames they produce.

The present invention pertains to a method for operating a first cell of a fire fighter trainer. The method comprises the steps of activating a controller in the first cell. Then there is the step of igniting a flame in the first cell. Next there is the step of sensing conditions about the first cell. Then there is the step of informing the controller of the conditions about the first cell. Next there is the step of informing the controller of the conditions about a second cell disposed adjacent the first cell. Next there is the step of changing the flame as a function of conditions about the first cell and the second cell.

The present invention also pertains to a method of training a trainee about fire fighting. The method comprises the steps of establishing a training scenario for a fire fighter trainer. Next there is the step of introducing the trainee to the fire fighter trainer. Then there is the step of conducting a training session using the training scenario in the fire fighter trainer.

BRIEF DESCRIPTION OF THE DRAWINGS

In the accompanying drawings, the preferred embodiment of the invention and preferred methods of practicing the invention are illustrated in which:

Figure 1 is a schematic representation of a burn cell matrix of the present invention.
Figure 2 is a schematic representation of a burn cell of the present invention.

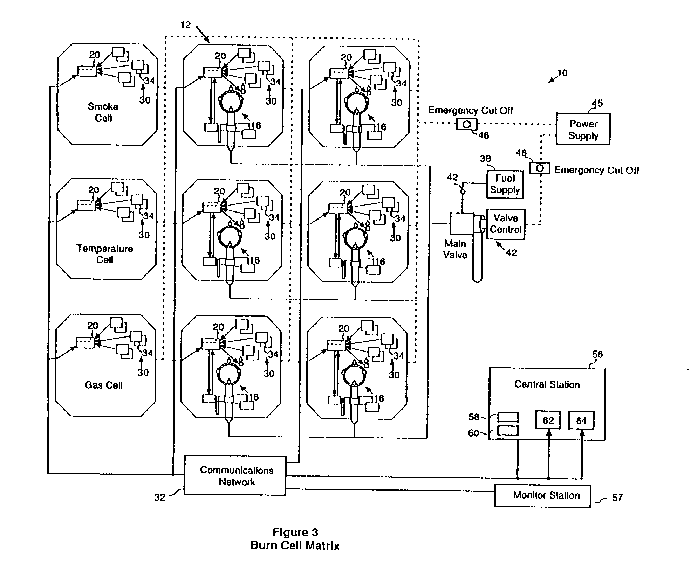

Figure 3 is a schematic representation of a fire fighter trainer of the present invention.
Figure 4 is a schematic representation of a fire fighter trainer of the present invention.

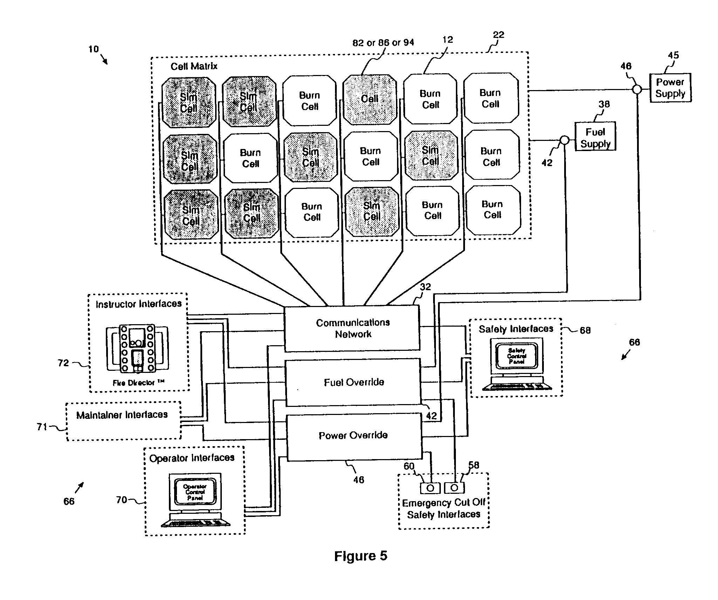

Figure 5 is a schematic representation of a fire fighter trainer of the present invention.
Figure 6 is a schematic representation of a fire fighter trainer of the present invention.
Figure 7 is a schematic representation of a fire fighter trainer of the present invention.
Figure 8 is a schematic representation of a cell controller.
Figure 9 is a schematic representation of a portable operator interface module.
Figure 10 is a block diagram of a portable operator interface module.
Figures 11a-11c are flow charts for exercise authoring.

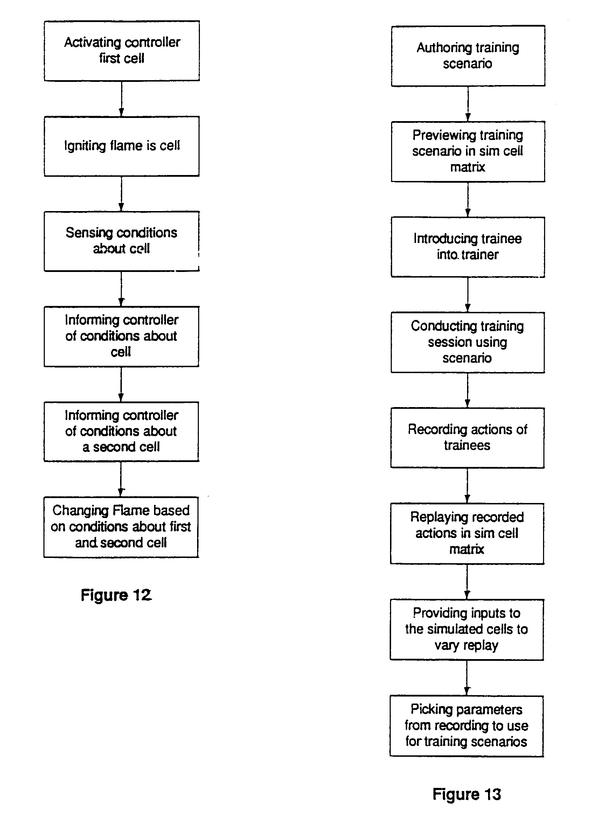

Figure 12 is a flow chart of a method for operating a first cell of a fire fighter trainer.
Figure 13 is a flow chart of a method of training a trainee about fire fighting.

DESCRIPTION OF THE PREFERRED EMBODIMENT

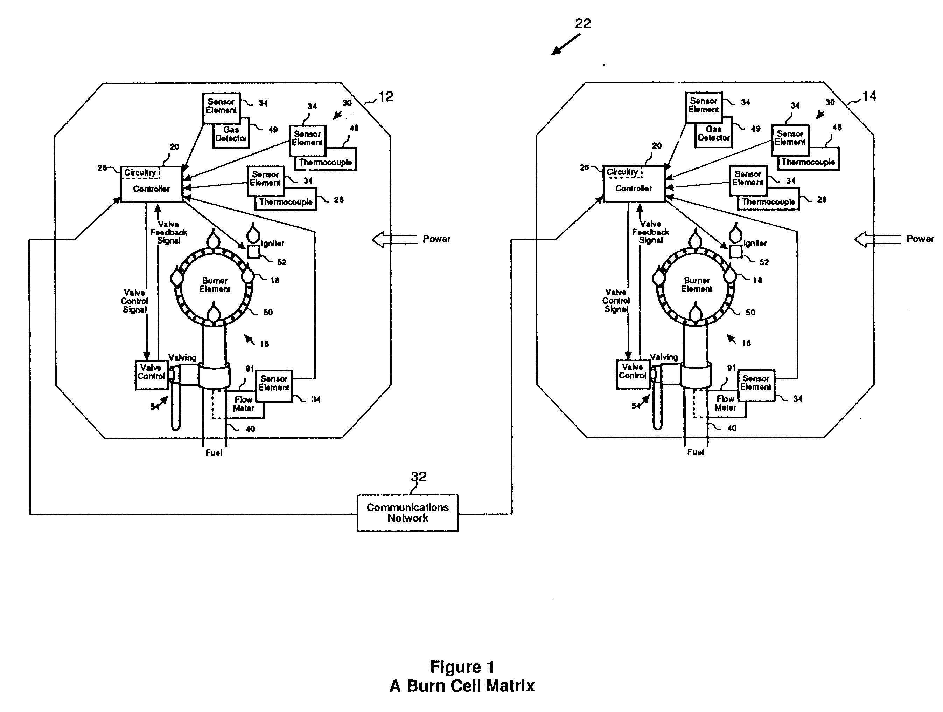

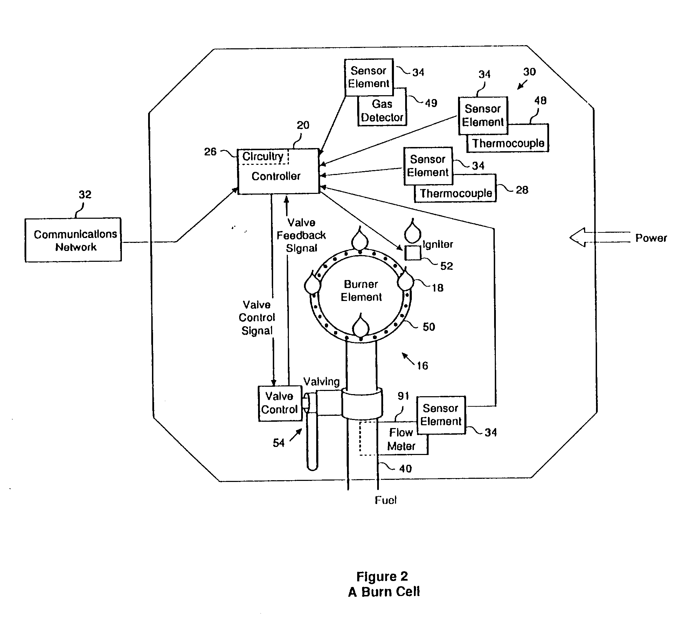

Referring now to the drawings wherein like reference numerals refer to similar or identical parts throughout the several views, and more specifically to figures 1 and 2 thereof, there is shown a fire fighter trainer 10. The fire fighter trainer 10 comprises a first cell and a second cell, disposed in the vicinity of the first cell. Preferably, each cell has a burner mechanism 16 for producing a flame 18 and a controller 20 which controls the burner mechanism 16. The flame 18 produced by the burner mechanism can be real or virtual as depicted on a screen that is part of the burner mechanism 16. The controller 20 can preferably control the burner mechanism 16 without any external inputs, or with external inputs to better adapt the flame 18 to correspond with external conditions and instructions.

The first cell and the second cell together form a cell matrix. The first cell and second cell can be a first burn cell 12 and a second burn cell 14. The cell matrix can be a burn cell matrix 22. The first cell and second cell can be a first virtual cell and a second virtual cell. The cell matrix can be a virtual cell matrix. A cell can produce a real or a virtual flame. A burn cell produces a real flame. A virtual cell produces a virtual flame, which can be any representation of the flame or flame conditions that is useful for training.

In general, the fire fighter trainer 10 can be comprised of a first cell and a second cell disposed adjacent to the first cell. Each cell has a mechanism for producing some type of output for training a fire fighter. The trainer 10 would also have a controller which controls the mechanism. The first and second cells together form a cell matrix.

The fire fighter trainer 10 preferably also includes a communications network 32. The first cell 12 and second cell 14 are in contact with the communications network 32 and are in communication with each other through the communications network 32.

The communications network 32 can be a common bus running through the burn cell matrix 22. Connected to each bus is a controller 20 of each burn cell of the burn cell matrix 22. Signals passing over the bus would have an identifier which would correspond with a given burn cell so the burn cell would know a signal in a communications network is meant to be understood by the burn cell, as is well known in the art. Burn cells that could not understand the identifier would not be able to read the signals to understand them to implement or utilize the signal.

Alternatively, the communications network 32 can be formed by connecting the controllers 20 and other components, such as the interactive interfaces which are described below, in series so that a signal passes along a communications network 32 from the first burn cell 12 to the second burn cell 14 and so on. In this embodiment of the communications network 32, the individual controllers and interactive interfaces are nodes that are directly part of the communications network 32 since the communications network 32 actually extends directly through each component. This is different from a bus which separately extends through the burn cell matrix 22 and has a separate connection with each controller 20 or interactive interface module 66.

In yet another embodiment of the communications network 32, it can be partitioned to utilize predefined designs and connectivity. For instance, the first burn cell 12 can be connected to the second burn cell 14 and any other burn cells that are directly adjacent to the first burn cell 12. Since in this case the first burn cell 12 is going to control its burner mechanism 16 based only on the environment directly around it, the first burn cell 12 is only concerned with those burn cells directly adjacent to it which have the ability to impact the operation of its burner mechanism 16. There can also be a bus connected to the controller 20 to provide only signals from the interactive interface module 66. This frees up the bus to carry only certain types of signals and have greater activity based on these signals, and to have only certain types of signals transmitted on the connections that are local between the cells.

Preferably, the burn cell 12 includes a fuel mechanism 24 for providing fuel to the burner mechanism 16 to produce the flame 18. Preferably, the controller 20 includes electronic circuitry 26 that controls the burner mechanism 16 based on algorithms implemented by the electronic circuitry 26.

The burner mechanism 16 preferably includes a burner element 50 connected to piping 40 in which fuel from the piping 40 is ignited at the burner element 50 to produce the flame 18. The burner mechanism 16 preferably also includes an igniter 52 connected to the burner element 50 to ignite the fuel to create the flame 18. The igniter 52 can be a pilot light 51 or a spark plug. Alternatively, the spark plug can light the pilot light 51. Additionally, the burner mechanism 16 is comprised of valving 54, connected to the piping 40 and to the controller 20, which controls the flow of fuel to the burner element 50 based on the valve control signal received from the controller 20.

The fire fighter trainer 10 can also include a sensor mechanism 30 for sensing conditions about the cell matrix 22 and producing sensor signals corresponding to the conditions. The sensor signals are received by the controller 20 of the cell 12. The sensor mechanism 30 is in communication with the controller 20 of the cell. The controller 20 of each burn cell 12 controls the associated burner mechanism 16 based on the sensor signal it receives and on the algorithms implemented by the electronic circuitry 26.

In one embodiment, a burn cell can have its controller 20 operate its burner mechanism 16 based on the sensor signal the controller 20 receives and the signals the controller 20 receives from the communications network. In another embodiment, the controller 20 can control the burner mechanism 16 based on the algorithms and only on the sensor signals that it receives from the sensor mechanism 30. In this embodiment, there are no signals that are obtained from the communications network 32 to play a part in how the controller 20 controls the burner mechanism 16. In this embodiment, the burn cell is not completely closed to its environment as when the burn cell runs only on the signals that the controller 20 provides to the burner mechanism 16 based only on algorithms implemented by electronic circuitry 26. The receipt of sensor signals from the sensor mechanism 30 provides feedback to the controller 20 about the environment around the burn cell.

In yet another embodiment, instead of sensor signals only being provided to the controller 20 to provide the controller 20 feedback information about the environment around the burn cell, there are only signals from the communications network 32 which provide feedback to the controller 20. The controller 20 uses these signals from the communications network 32 with the algorithms implemented by electronic circuitry 26 to control the burner mechanism 16.

The sensor mechanism 30 preferably includes a first sensor element 34 disposed at the first cell 12 which senses conditions about the first cell 12 and produces a first sensor signal corresponding to the given conditions about the first cell 12. The first sensor element 34 is in contact with the controller 20 of the first cell 12 so the controller 20 receives the first sensor signal. The controller 20 preferably controls the burner mechanism 16 of the first burn cell 12 based on the first sensor signal and on the algorithms implemented by the electronic circuitry 26.

The sensor mechanism 30 preferably also includes a second sensor element 36 disposed at the second cell 14 which senses conditions about the second cell 14 and produces a second sensor signal corresponding to conditions about the second cell 14. The second sensor element 36 is in contact with the controller 20 of the second cell 14 so the controller 20 can receive the second sensor signal. The controller 20 preferably controls the burner mechanism 16 of the second burn cell 14 based on the second sensor signal and on the algorithms implemented by its electronic circuitry 26. The sensor mechanism 30 can also include a third sensor element 27 disposed in the burn cell matrix 22 to sense conditions of the burn cell matrix 22. The third sensor element 27 is connected to the communications network 32 to send and receive signals over it. The third sensor element 27 can provide information to the controller 20 about the flame 18 or another area in the burn cell matrix. There can be as many sensor elements as desired.

Each controller 20 preferably produces a controller signal corresponding to its burn cell state. The controller signal is provided to the controller 20 in the other cell. Preferably, each controller 20 controls its associated burner mechanism 16 based on the sensor signal and the controller signal the controller 20 receives and the algorithms implemented by its electronic circuitry 26.

The fuel mechanism 24 for providing fuel preferably includes a fuel supply 38 and piping 40 connected to the fuel supply 38 and the burner mechanism 16 of each burn cell through which fuel for the flame 18 flows. The fuel supply 38 can be adjacent to or remote from the burn cell matrix 22 or each burn cell can have its own fuel supply 38 that is independent of all other fuel supplies 38 and other burn cells. In the latter case, piping 40 would then extend from the fuel supply 38 in the burn cell to the burner mechanism 16.

The fuel mechanism 24 for providing fuel preferably includes a fuel shutoff mechanism 42 connected to the piping 40 which, when activated, stops the flow of fuel from the fuel supply 38 to the burner mechanism 16 of each cell. If the fuel supply 38 is distinct for a burn cell, then the fuel shutoff mechanism 42 is connected to the fuel mechanism 24 in the burn cell.

The fuel mechanism 24 preferably also includes a power mechanism 44 connected to each cell to provide electricity to the cell. The power mechanism 44 preferably includes a power distribution network. The power mechanism 44 can include a power supply 45 in lieu of a power distribution network. The power supply 45 can be adjacent to or remote from the cell matrix 22 or each cell can have its own power supply that is independent of all other power supplies and other cells.

The power mechanism 44 preferably includes a power shutoff mechanism 46 which, when activated, stops electricity from flowing to each cell. If the power supply 45 is distinct for a cell 12, then the power shutoff mechanism 46 is connected to the power mechanism 44 in the cell 12. The electricity is used to operate the controller 20, the burner mechanism 16, the sensor mechanism 30 and any other components of the burn cell.

Each sensor element 34 preferably includes a thermocouple 48 which detects the temperature at the thermocouple's burn cell. In this case, the sensor signal includes information about the temperature of the burn cell. Alternatively, the sensor element can comprise a multi-suppressant sensor, as described, for instance, in U.S. Patent 4,861,270 and U.S. Patent 4,983,124, incorporated by reference, which can identify the type of suppressant that is placed onto the burn cell.

Each burn cell controller 20 preferably communicates with its neighboring burn cell controllers 20 to produce a realistic fire. The temperature of each burn cell is continuously monitored through the use of thermocouples 48. Each burn cell can be subdivided into several areas, each area containing one thermocouple 48. Each thermocouple 48 continuously samples that area's temperature. Each burn cell controller 20 continuously monitors the temperatures using each of its thermocouples 48.

The flame 18 starts in a burn cell with an igniter 52. The burn cell controller 20 determines the burn cell temperature and/or rate of temperature change and opens its control valve 54 to realistically simulate the growth of the fire based on the algorithms implemented by the electronic circuitry 26. The flame 18 spreads to neighboring burn cells through the burn cell controllers 20 communicating their local conditions with each other. Each burn cell opens its control valve 54 based on the neighboring burn cell conditions and on the temperature and/or rate of temperature change determined by its burn cell controller 20. Burn cell control valves 54 open and can continue to open as long as the burn cell controller 20 determines that the burn cell temperature is not decreasing. The flame 18 can continue to spread to the neighboring burn cells until the burn cells in the matrix 22 are engulfed in flames.

Conversely, when the burn cell controller 20 detects a burn cell temperature decrease, the controller 20 commences to close the corresponding burn cell's control valve 54 to realistically simulate the extinguishment of the flame 18. As the flame 18 is being extinguished, each burn cell controller 20 communicates with its neighboring burn cell controllers 20 and the neighboring burn cells begin to close their control valves 54 based on the communicated flame 18 conditions and based on the temperature and/or rate of temperature change detected by the burn cell's own thermocouples 48, thus achieving a realistic simulation of the extinguishment of the flame 18. The control valves 54 can continue to close as long as the burn cell controller 20 continues to determine that the burn cell temperature is decreasing at an appropriate rate. Whenever the burn cell temperature fails to decrease at the necessary rate, such as when the fire fighter trainee fails to completely extinguish the fire, the flame 18 may grow again by the burn cell controller 20 communicating with its neighboring burn cell controllers 20 and opening its control valves 54.

Preferably, the burn cell controller 20 continuously monitors the igniter thermocouple 28 to verify that the igniter 52 is still on fire. When the controller 20 determines from the thermocouple 28 temperature that the igniter 52 is no longer lit, that burn cell's control valve 54 is closed and the flow of fuel to that burn cell's burner element 50 is stopped.

Preferably, the burn cell controller 20 continuously monitors the control valve 54 to verify that the control valve 54 is allowing the correct flow of fuel to pass to the burner element. If the controller 20 determines that the control valve 54 is not allowing the correct flow of fuel to pass, then the controller 20 adjusts the valve control signal to achieve the correct fuel flow.

Preferably, the burn cell controller 20 continuously monitors status -- such as for the equipment enclosure, simulator enclosure, emergency power shutoff mechanism (EPO) 46, neighboring burn cells, power mechanism 44, and fuel mechanism 24 -- to provide a safe training environment. The burn cell controller 20 can automatically disable the burn cell whenever the burn cell controller 20 determines that an unsafe condition exists. The burn cell controller 20 can communicate the unsafe condition to other burn cells through the communications network 32. The burn cell controller 20 can disable the burn cell whenever the controller 20 receives a communication that an unsafe condition exists at another burn cell.

The fire fighter trainer 10 can include a central station 56. The fuel shutoff mechanism 42 can include a first fuel shutoff activation switch 58 disposed at the central station 56 and the emergency power shutoff mechanism 46 can include a first power shutoff activation switch 60 disposed at the central station 56. The fire fighter trainer 10 can include a cell matrix monitor 62 connected to the communications network 32 which receives signals from each controller 20 and displays representations of the signals to monitor conditions at each burn cell. The cell matrix monitor 62 can be disposed at the central station 56. The trainer 10 can include an operator console 64 in contact with the communications network 32 from which a training session is initiated at the first burn cell 12 and from which training is observed. The operator console 64 can be disposed at the central station 56.

The fire fighter trainer 10 can include at least a first interactive interface module 66 in communication with the communications network 32 and disposed in the cell matrix 22 to monitor the cell matrix 22 and the training and to produce interface module signals to provide to a controller 20. The first interactive interface module 66 can include a safety interface module 68 disposed in the cell matrix 22. There can be a second fuel shutoff activation switch 74 of the fuel shutoff mechanism 42 disposed in the safety interface module 68, and also a second power shutoff activation switch 76 of the power shutoff mechanism 46 disposed in the safety interface module 68. A cell matrix monitor 62 can be disposed in the safety interface module 68. In the preferred embodiment, the procedure and control of the implementation of safety measures is isolated as distinct in the trainer 10. Changes can be made to the safety measures without affecting or requiring changes to another aspect of the trainer 10.

The first interactive interface module 66 can include an operator interface module 70 disposed in the cell matrix 22 to initiate training sessions and training exercises. An operator interface module 70 can include a cell matrix monitor 62 to monitor cells. The operator interface module 70 is in communication with the communications network 32.

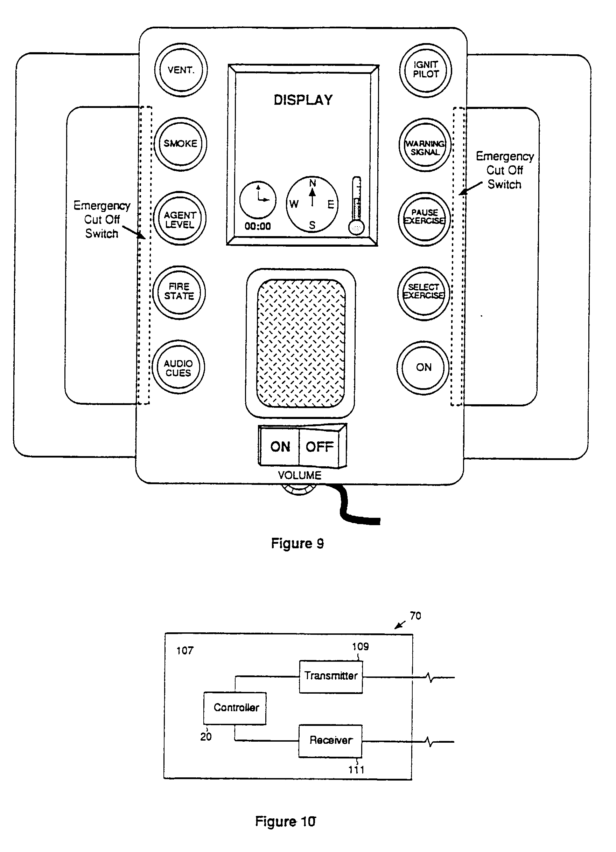

The operator interface module 70 for the fire fighter trainer 10 can be comprised of a portable housing 107, as depicted in figure 9. A controller 20 can be disposed in the housing 107. The operator interface 70 can also be comprised of a transmitter 109 disposed in the housing 107 for transmitting signals from the controller 20. The transmitter 109 is connected to the controller 20. Additionally, the operator interface module 70 is comprised of a receiver 111 disposed in the housing 107 for receiving signals for the controller 20. The controller 20 is connected to the receiver 111. The transmitter 109 and receiver 111 are preferably connected to the communications network 32 to provide signals thereto or receive signals therefrom. Alternatively, the transmitter 109 and receiver 111 can be connected directly to one or more burn cells to receive their status and provide instructions for their operation to them. The transmitter 109 and receiver 111 can be radiofrequency based so that the portable housing 107 is free to be carried anywhere within the burn cell matrix 22 and still communicate with the communications network 32 or the burn cell. Alternatively, there can be wires that connect the housing 107 and thus the transmitter 109 and receiver 111 to the communications network 32 to which the wires are connected.

The first interactive interface module 66 can also include an instructor interface module 72 disposed in the cell matrix 22 to monitor trainee behavior during a training session. In the preferred embodiment, the procedure and control of the implementation of monitoring measures is isolated and distinct in the trainer 10. Changes can be made to the monitoring measures without affecting or requiring changes to another aspect of the trainer 10. As described for the operator interface module 70, each of the other interface modules can also be part of a portable housing with their respective functionality.

The first interactive interface module 66 can also include a trainee interface module 73 disposed in the cell matrix 22 to deliver training to trainees. In the preferred embodiment, the procedure and control of the implementation of training measures is isolated and distinct in the trainer 10. Changes can be made to the training measures without affecting or requiring changes to another aspect of the trainer 10.

The first interactive interface module 66 can also include a maintainer interface module 71 disposed in the burn cell matrix 22 to allow maintenance personnel to check the operation of and to adjust trainer components. In the preferred embodiment, the procedure and control of the implementation of maintenance measures is isolated and distinct in the trainer 10. Changes can be made to the maintenance measures without affecting or requiring changes to another aspect of the trainer 10.

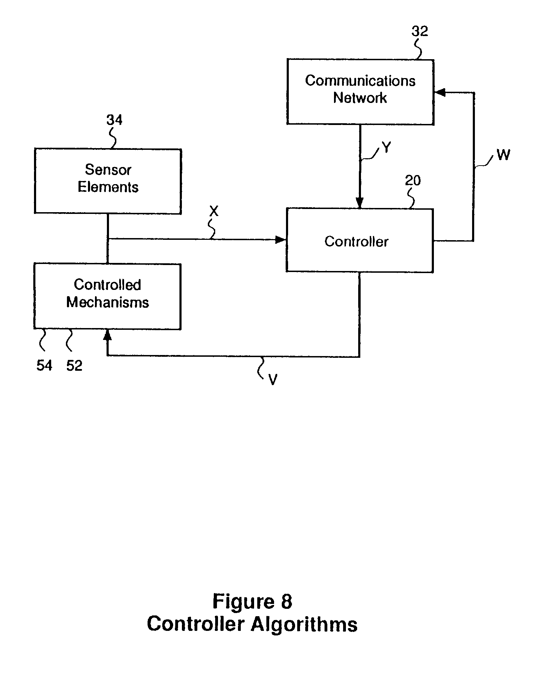

Generally, the operation of the controller 20 is based on input signals it receives and the algorithms it implements. From the controller 20 are issued output signals, as shown in figure 8. The input signals are comprised of signals the controller 20 receives from the communications network 32, and input signals it receives from sensors and input signals providing feedback from mechanisms controlled by the controller. The input signals from the sensors can include signals from thermocouples 48 and signals from gas sensors 49. The signals are typically informative in nature and indirectly cause the controller 20 to produce output signals based on the controller's algorithms. The sensor signals and the feedback signals can each be represented as $X_j$ and X identifies all the signals the controller 20 receives from the sensors and from controlled mechanisms.

The input signals from the communications network 32 can include signals from controllers 20 disposed in other cells 12, signals from sensor elements 34 disposed in other cells 12, feedback signals from other cells, and signals from interactive module interfaces 66. Each signal from the communications network 32 can be represented as $Y_k$ and Y identifies all the signals the controller 20 receives from the communications network 32. The signals from the other controllers can be commands in nature directly causing the controller 20 to produce corresponding output signals. The signals from the other controllers or sensors in the cell matrix can be informational in nature describing the status of the other cells or other areas of the cell matrix and indirectly causing the controller 20 to produce corresponding output signals based on the algorithms in the controller 20. The signals from the interactive module interfaces 66 can be instructional or informative in nature or can cause the algorithms in the controller 20 to be changed.

The output signals from the controller 20 can include signals to valving 54 of the burn cell 12 of the controller 20. The signals to the valving 54 control the valving 54 which in turn controls the flow of fuel to the burner element 50 and thus the size of the flame 18. The signals output by the controller 20 can each be represented as $V_m$ and V identifies all the signals the controller 20 outputs to mechanisms it controls. The output signals V can be represented as

$$V_m(t) = \sum_{X_j \epsilon X} \sum_{i=0}^{\infty} a_{mj}(i) \cdot X_j(t-i) + \sum_{Y_k \epsilon Y} \sum_{i=0}^{\infty} b_{mk}(i) \cdot Y_k(t-i)$$

Similarly, the output signals from the controller 20 to the communications network 32 can be represented as

$$W_n(t) = \sum_{X_j \epsilon X} \sum_{i=0}^{\infty} c_{nj}(i) \cdot X_j(t-i) + \sum_{Y_k \epsilon Y} \sum_{i=0}^{\infty} d_{nk}(i) \cdot = Y_k(t-i)$$

In both instances, for V(t) and W(t), their respective equations show that they are a function of the input signals X and Y. In this form, i is an integer index that has some time units. t ranges over time. The a(i), b(i), c(i), and d(i) are positive, negative or zero constants which can be distinct from one another.

These equations are discrete time filters which operate on the input signals. Alternatively, the equations can be continuous time integrals. For instance, $V_m$ is then

$$V_m(t) = \sum_{X_j \epsilon X} \int_0^\infty a_{mj}(s) \cdot x_j(t-s)\,ds + \sum_{Y_k \epsilon Y} \int_0^\infty b_{mk}(s) \cdot Y_k(t-s)\,ds$$

In terms of how the controller 20 actually decides on what types of signals to produce, several examples will now be given. In the event that a controller 20 receives a thermocouple 48 signal $X_j$ indicating that the temperature of the thermocouple 48 is increasing or being maintained above a certain threshold, the controller 20 produces a signal $V_m$ to the valving 54. This signal causes the valving 54 to open further if the thermocouple signal indicates the temperature is rising or maintains the valving 54 at its current open position if the thermocouple temperature is staying the same. Similarly, if a signal $Y_k$ from the communications network 32 is received which indicates an adjacent burn cell is becoming hotter and increasing flow of fuel to its burner mechanism 16 or if an operator interface module 70 or an instructor interface module 72 sends a signal to the controller 20 commanding it to maintain the valving 54 as is or open the valving 54 further to expand the flame 18, then the controller 20 will generate a signal $V_m$ to the valving 54 and the valving 54 will respond to maintain or increase the flame 18. As the controller 20 produces these signals to control the valving 54, the controller 20 also produces signals $W_n$ to send out through the communications network 32 to the corresponding virtual cell in a cell matrix monitor 62 indicating what the controller 20 is commanding the valving 54 to do, so the virtual cell can depict the status of the controller 20. Signals $W_n$ can also be sent to adjacent burn cells so they can respond according to their algorithms, and signals $W_n$ can be sent to operator 70 or to instructor interactive modules 72 to inform them of the status of the burn cell.

If the signal $X_j$ from the thermocouple 48 to the controller 20 indicates that the temperature is dropping or has gone below a threshold temperature, then the controller 20 produces a signal $V_m$ to the valving 54 to decrease flow of fuel to the burner element 50 or to shut the valving 54 completely so no fuel goes to the burner element 50 and the flame 18 is extinguished. The controller 20 can operate in a similar manner if it receives signals $Y_k$ from adjacent burn cells indicating that the temperatures or the flames 18 are being reduced at the adjacent burn cells. Also, signals $Y_k$ from the communications network 32 from the operator 70 or the instructor interactive modules 72 can command the controller 20 to reduce the flame 18 or extinguish the flame 18 by closing the valving 54.

Additionally, totally independently of any input signals, the algorithm and the controller 20 can have training scenarios where based on time, the flame 18 is caused to expand to simulate a spreading fire or to contract to simulate a flame 18 that is burning its fuel out, and thus contracting.

The present invention pertains to a fire fighter trainer 10. The fire fighter trainer 10 comprises a burn cell matrix 22 comprising N burn cells, where $N \geq 2$ and N is an integer. Each burn cell has a burner mechanism 16 to produce a flame 18, and a controller 20 which is in communication with the burner mechanism 16 and controls the flame 18. The fire fighter trainer 10 can include a safety interface module 68 in communication with the burn cell matrix 22 for shutting off the flame 18 in or power to the burn cell matrix 22. The fire fighter trainer 10 can also include an operator interface module 70 in communication with the burn cell matrix 22 to initiate training exercises in the burn cell matrix 22 and to monitor the burn cell matrix 22 during operation.

The present invention pertains to a fire fighter trainer 10. The fire fighter trainer 10 comprises a first burn cell 12 and a second burn cell 14. Each burn cell has a burner mechanism 16 which produces a flame 18. Each burn cell also has a sensor mechanism 30 which senses conditions about the cell and produces a sensor signal corresponding to the conditions. The sensor mechanism can be comprised of a sensor disposed at each burn cell to sense the conditions about the cell or the sensor mechanism can include sensors which are adjacent to or apart from the cell or also a part of the cell and produces a sensor signal corresponding to the conditions of the cell. Each burn cell also has a controller 20 in contact with the sensor mechanism 30, with the controller 20 of the other burn cell and the burner mechanism 16 to control the flame 18 of the cell based on the sensor signal the controller 20 receives from the sensor mechanism 30, on a controller signal the cell receives from the controller 20 of the other burn cell and on algorithms implemented by the electronic circuitry 26 of the burn cell's controller 20. The controller 20 produces a controller signal based on signals it receives and on algorithms implemented by its electronic circuitry 26. The fire fighter trainer 10 is also comprised of a fuel mechanism 24 for providing fuel to the burner mechanism 16 to produce the flame 18.

The present invention pertains to a fire fighter trainer 10. The fire fighter trainer 10 comprises a burn cell matrix 22 having at least one burn cell 12 which produces a flame 18. Each burn cell 12 has a status. Additionally, the fire fighter trainer 10 is comprised of a virtual cell matrix 90 which corresponds to the burn cell matrix 22. The virtual cell matrix 90 has at least one virtual cell 94 corresponding to the burn cell in the burn cell matrix. The virtual cell 94 shows the status of the corresponding burn cell 12.

The present invention pertains to a fire fighter trainer 10. The fire fighter trainer 10 comprises a virtual cell 94 which depicts a flame 18 and coordinates the depiction of the flame 18 with actions of a user. The fire fighter trainer 10 is also comprised of an input mechanism 93 through which the actions of the user are conveyed to the virtual cell 94. The input mechanism 93 is connected to the virtual cell 94.

Preferably, the input mechanism 93 includes an entry device such as a keyboard having keys or a pointing device having buttons. At least one key or button is associated with an action that is provided to the virtual cell 94 that affects the depiction of the flame 18 or affects the status of the corresponding burn cell 12.

Preferably, the input mechanism 93 includes a sensor mechanism 30 which senses conditions about the virtual cell 94 and produces a sensor signal which affects the representation of the conditions or affects the status of the corresponding burn cell. The sensor mechanism 30 is connected to the virtual cell 94 to provide the sensor signal to the virtual cell.

In the operation of the preferred embodiment, each cell in a cell matrix 22 is programmed for operation in accordance with the algorithms implemented by the cell controller 20 electronic circuitry 26. This programming includes various scenarios that can occur during training of trainees in the cell matrix 22. The programming which is implemented in or stored in the electronic circuitry 26 of the controller 20 of the cell 12 causes the controller to issue a controller 20 signal to the valve 54 to control the flow of fuel through the valve 54. The controller 20 can issue the controller signal to the valve 54 when it receives either a controller signal from another controller 20 that indicates that the other controller 20 is causing a flame 18 to be produced in its burn cell or that indicates that there is enough heat to generate a flame 18 in the burn cell adjacent to it.

Alternatively, a sensor signal from the first sensor mechanism 34 in the first burn cell 12 can cause the controller 20 to ignite a flame 18 if the conditions sensed by the first sensor mechanism 34 are appropriate. For instance, the controller 20 can initiate fuel flow by varying the valve 54 because a sensor signal from the first sensor mechanism 34 indicates that the temperature about the first burn cell 12 is hot enough to cause a flame to erupt. When the valve 54 responds to a controller signal from the controller 20 to open, fuel flows through the piping 40 in an amount corresponding to how much the valve 54 has opened because of the controller signal. The fuel flows to the burner element 50 of the first burn cell 12. The igniter 52 of the first burn cell 12 then causes a flame 18 to ignite at the burner element 50. The flame 18 that results is at a size that corresponds to the amount of fuel that is allowed to flow through the valve 54 to the burner element 50. The fuel flows from the fuel supply 38 that is disposed adjacent to the burn cell matrix 22. The fuel from the fuel supply 38 flows through the piping 40 to the first burn cell 12.

Additionally, the first burn cell 12 can produce a flame 18 when a signal from the operator interface module 70 is received by the controller 20. The signal from the operator interface module 70 is provided to the controller 20 of the first burn cell 12 through the communications network 32 to which the operator interface module 70 is connected and the first burn cell 12 is connected. The communications network can be an ethernet local area network or other well known form of communications networks. The communications network itself can be copper wire based, or optical fiber based or radio signals based on communications that occur through transmitter/receiver relationships over radio frequency. The communications network can be disposed under the flooring of the burn cell matrix 22 so that any cabling would not be tripped over or torn or otherwise disrupted during training sessions. By having the proper communications network bandwidth, television cameras can also be located in each burn cell or randomly throughout the burn cell matrix 22 to allow detailed review and recordation of the actions of the trainee in the burn cell matrix 22 as well as the operation of the burn cell matrix 22 itself. Furthermore, either with cameras or without, transducers or other forms of identification of the location of the trainee can be utilized to carry out various types of training scenarios as more fully identified in U.S. patent application serial number 08/196,522, incorporated by reference. For instance, by knowing the location of the trainee in the burn cell matrix 22, preestablished scenarios can be carried out such as the production of smoke from a smoke maker when a trainee is at a certain location, or a simulated explosion can occur so the trainee can be exposed to a greater variety of training experiences to better learn to be a better fire fighter.

When a training exercise begins, at least the first burn cell 12 produces a flame 18. The flame spreads among burn cells depending on the programming and fire profiles, as described below, established in the burn cells of the burn cell matrix 22 and/or depending on actions taken before and during the training exercise at any of the several interactive interface modules 66 (safety interfaces 68, operator interfaces 70, instructor interfaces 72, trainee interfaces 73, maintainer interfaces 71) that may be in contact with the burn cell matrix via the communications network. If the trainee is unsuccessful in extinguishing the flame 18 of the first burn cell 12, then enough heat may be generated or based on a timing mechanism, enough time may elapse so that the second burn cell 14 ignites a flame 18. If there are more burn cells in the burn cell matrix, this can repeated as necessary. An instructor within the burn cell matrix 22 who is observing the trainee attempting to extinguish the flame 18 of the first burn cell 12 can ad-lib and through an operator interface 70 or through an instructor interface 72 can cause smoke from a smoke maker to be produced or simulated harmful gases to be released near the trainee or otherwise adjust the fire conditions of the burn cell to cause the trainee to either react or learn to react to such conditions.

During the training session, if for any reason there appears to be danger or even the threat of danger to the trainee or trainees, then the instructor in the burn cell matrix 22 can activate a second fuel shutoff activation switch 74 which is part of a safety interface module 68 in the burn cell matrix 22 to stop all flow of fuel to the burn cell matrix 22. The instructor can also activate a second power shutoff activation switch 76 that is also part of the safety interface module 68 to stop all electricity to the burn cell matrix 22 and shut down the burn cell matrix. Additionally, either concurrently or separately, instructors or safety officers in the central station 56, which may overlook the burn cell matrix 22, can push either or both of a first fuel shutoff activation switch 58 or the first power shutoff activation switch 60 which automatically causes all fuel flow through the piping 40 to cease or shuts down all electricity is also shut down at a key location 46. By stopping the power to operate the system, and by stopping all flow of fuel to the burn cell matrix, the flame 18 in any burn cell is immediately extinguished. Each fuel shutoff activation switch 58 is in contact with a fuel shutoff mechanism 42, such as a master valve, through which all fuel flows into the burn cell matrix 22. Similarly, each power shutoff activation switch 60 is connected to a power shutoff mechanism 46, such as a master valve, through which all electricity flows into the burn cell matrix 22.

In an alternative embodiment, the burn cell can have its own extinguishment system present so that the instructors either in the burn cell matrix 22 or in the central station 56 can activate the first or second fuel shutoff activation switches, but not the power shutoff activation switches. In this way, power is still provided to the burn cell matrix 22 to allow the extinguishment systems present in each burn cell to be activated and operated. It could be that by automatically activating either the first fuel activation switch 58 or the second fuel shutoff activation switch 74, the extinguishment system in each cell is automatically activated to not only extinguish the flame 18 more quickly but also to cool the region so that there can be no transient thermal activity which could still cause a burn or injury to a trainee even though the flame 18 has been extinguished.

The present invention pertains to a fire fighter trainer 10. The fire fighter trainer 10 comprises a burn cell 12 containing a burner mechanism 16 for producing a flame 18. The fire fighter trainer 10 is also comprised of a closed loop controller 20 for the burner mechanism 16. The controller 20 is in communication with the burner mechanism 16. Preferably, the controller 20 includes a sensor mechanism 30 which determines the size of the flame 18. By determining the size of the flame 18, the amount of fuel flowing to the burner mechanism can be determined to produce the desired size of the flame 18, or be determined to produce an incorrect flame 18 size. In the latter case, the flow of fuel can be modified so that the desired size flame 18 can result. It is this determination of the size of the flame with feedback to the burner mechanism 16 which causes the controller 20 to be a closed loop control system.

The sensor mechanism 30 preferably includes an infrared detector 89 which detects the size of the flame 18 and produces a size signal. The infrared detector 89 detects the signature of the flame 18 and, using one of a number of methods well known in the art, produces the size signal corresponding to the size of the flame 18. The sensor mechanism 30 can include a flow meter 71 in the piping 40, separate or together with the infrared detector 89, to identify the amount of flow flowing through the piping 40 to the burner element 50. By knowing the magnitude of the flow of fuel through the piping 40, the size of the flame 18 can be determined since the size of the flame 18 corresponds to the amount of fuel flowing through the piping 40 per unit time. The controller 20 is in communication with the infrared detector 89 and the flow meter 91 to receive the size signal of the burner mechanism 16. The controller 20 causes the burner mechanism 16 to produce the flame 18 corresponding to the size signal.

The present invention pertains to a fire fighter trainer 10. The fire fighter trainer 10 comprises a burn cell matrix 22 comprising a plurality of burner mechanisms 16 which produce a flame 18. The fire fighter trainer 10 is also comprised of a control mechanism 91 for providing distributed control over the burner mechanisms 16 and flame 18 they produce, and their safe operation. The control over the burner mechanisms safe operation is separate and distinct from the control over the burner mechanism 16 and the flames 18 they produce. By being separate and distinct, the safe operation of the burner mechanisms 16 can be changed or varied without affecting the operation of the burner mechanisms 16 and the flames 18 they produce and vice versa. By being separate and distinct, it facilitates the flexibility of changing the different control functions so they can be better adapted to a given situation as the needs dictate. Furthermore, by having distributed control, the different functions can be provided to a single controller which serves a given function for a given time at predesignated times so that each function has an opportunity to be served by the controller 20.

Furthermore, the fire fighter trainer 10 can have the control mechanism 91 provide distributed control over training scenarios performed by the burn cell matrix 22. The control over the training scenarios is separate and distinct from control over safe operation of the burner mechanisms 16 and separate and distinct from the control over the flames 18 they produce.

During a training exercise in the preferred embodiment, an instructor can alter the training scenario through an instructor interface 72 that is connected to the communications network 32. Also, the instructors can communicate with the trainee through trainee interface modules 73. Trainee interface modules can have speakers that allow the instructors to talk directly to the trainees. Trainee interface modules can have readouts in which the trainee can print messages or have them flash across a screen of the trainee interactive module 73 that is near or in the possession of the trainee.

When the trainee is attempting to extinguish a flame 18 in an alternative embodiment, a trainee may use some sort of suppressant, such as water, powder, or foam depending on what the training scenario calls for, and place it onto the first burn cell 12. A thermocouple 48 at the first burn cell 12 will be covered with the suppressant causing the suppressant to insulate the thermocouple from the flame 18. If foam or water is used, then the thermocouple 48 will also be cooled. By placing enough suppressant on the thermocouple 48 to cause it to drop to a predetermined temperature, then the thermocouple sensor signal sent to the controller 20 in the first burn cell 12 will cause the controller 20 to in turn produce a controller signal to the valve 54 to close or restrict further the flow of fuel and thus affect the flame 18. Alternatively, the multi-suppressant sensor can be used to identify the type of suppressant that is being used by the trainee to put out the fire. If, for instance, a reflash is to be programmed into the first burn cell 12 in the event that a thermocouple 48 is reduced to a first threshold temperature but is not reduced to a second threshold temperature, after a predetermined period of time the burn cell can simulate heat evaporating the suppressant or decomposing the suppressant. Then the heat is great enough that once the air is able to reach the heat source, there is a reignition. By causing the controller 20 to initiate a controller signal after a predetermined period of time to ignite the fuel, the valve 54 is caused to open, and the igniter 52 is caused to ignite the fuel at the burner element 50 to reignite the flame 18.

In one embodiment, one or more drawn sample pumps continuously draw air samples from enclosed areas of the trainer 10. Each air sample is pumped through tubing and a filter assembly that removes corrosive contamination prior to the air sample being tested against the least explosive level (LEL). Whenever the air sample is higher than the LEL, the trainer's alarms are activated and the trainer is automatically shut down via the fuel shutoff mechanism 42 and the power shutoff mechanism 46.

In one embodiment, when power is applied (or reset) to the trainer, the trainer enclosed areas are ventilated for a sufficient period of time to clear potentially combustible vapor from the burn cell matrix 22. While the trainer is in use, the enclosed area(s) are ventilated through a ventilation system in the burn cell matrix 22 to both provide a safe training environment and to provide air to fuel the fire. As part of the ventilation system, there is emergency operation which has intake ports adjacent to each burner mechanism and each smoke maker in the burn cell matrix 22. When the emergency mode of the ventilation system is activated, dampers in the duct work of the ventilation system open fully and fans or pumps are turned on high. This creates a strongly negative pressure at the intake ports which draws the atmosphere of the trainer out through the intake ports. At the same time, outflow ports of the ventilation systems located at the top of the burn cell matrix produce a strong positive pressure of air to fill the trainer with air. In this way, a circulatory flow is created to cleanse the atmosphere of the trainer. The emergency ventilation system is activated whenever:

a. The fuel shutoff mechanism 42 is activated.
b. The power shutoff mechanism 46 is activated.
c. Propane Detection System detects unsafe levels of propane
d. Passive Gas Monitor 49 detects unsafe levels of propane
e. Enclosure Temperature Monitors detects unsafe temperature

In the preferred embodiment, once a pilot is lit, that pilot is continuously monitored through the use of a thermocouple 28, to verify that the pilot remains lit. Once the pilot is determined to be no longer lit, the propane is shutoff to that area.

In the preferred embodiment, the automatic or manual selection of a power shutoff activation switch 60 causes the following:

a. Activation of the fuel shutoff mechanism 42
b. Activation of the power shutoff mechanism 46
c. Activation of the emergency mode of the ventilation system
d. Activation of the emergency sprinkler system
e. Deactivation of the smoke maker system

In one embodiment, the temperature of each enclosed trainer area is continuously monitored through the use of thermocouples 48. Whenever the temperature exceeds the preset maximum safe temperature, the automatic power shutoff procedures are caused to take place. The temperature monitoring can occur through the burn cells 12 thermocouples 48 or through temperature cells 12. Temperature cells are similar to burn cells except there is no flame 18 capability. The temperature cell 12 has at least one thermocouple 48 which reports to its controller 20. The controller 20 is also connected to the communications network 32 to receive and send signals.

In the preferred embodiment, the use of clean burning propane gas as a fuel makes the smoke maker system necessary. The smoke maker system simulates the visual obscuration that is characteristic of burning combustibles. Each smoke maker includes a distribution manifold to distribute the smoke to the various areas of the enclosure depending on the scenario and instructor controls. Smoke can be generated by injecting butylate triphenyl phosphate into a stream of hot air (approximately 800 degrees F). The smoke maker system automatically shuts down whenever the temperature reaches 1200 degrees F or other predetermined temperature limit or as a result of a power shutdown. The smoke maker is part of a smoke cell 12. A smoke cell 12 is like a burn cell except that the smoke maker replaces the burner mechanism 16.

The temperature of each burn cell 12 is continuously monitored through the use of thermocouples 48. In one embodiment, each burn cell is subdivided into several areas and each area contains one thermocouple 48. Each thermocouple 48 continuously monitors that area's temperature and during training when the rate of temperature change is consistent with the application of water the simulator responds by starting to close the valve(s) 54. The valve (s) 54 will continue to close as long as the trainer 10 determines that water is continuing to be applied. Each burn cell communicates to the other burn cells and the neighboring burn cells react (automatically opening/closing their respective valves 54) in response to the application or lack of application of water.

A passive gas monitor 49 continuously samples the air from the enclosed equipment areas of the trainer. Whenever the air sample is unsafe ($CO_2$, propane . . .) the trainer's alarms are activated and the trainer automatically shuts down. The passive gas monitor 49 can be part of its own gas monitor cell 12 similar to the temperature cell 12 except that instead of a thermocouple 48, there is a passive gas monitor 49. If the level of propane gas exceeds a preset maximum safe propane level, the automatic power shutdown procedures are caused to take place. Also other instances of the automatic power shutdown procedures occurring are power surges and burn cell matrix 22 defects which are detected by the maintainer interactive interface 71 causing the maintainer interactive interface 71 to invoke the automatic power shutdown procedures.

In the preferred embodiment, each main propane line from the "tank farm" 38 and each propane distribution enclosure contains a fuel shutoff system 42. The fuel shutoff system 42 includes "fail safe" valve motors, that automatically close whenever power is removed, e.g. power failure. Whenever a power shutdown event is detected, each fuel shutoff system 42 is automatically closed.

At the central station 56 or at a monitor station 57 adjacent to or remote from or within the burn cell matrix 22 or at an interactive interface module 66 adjacent to or remote from or within the burn cell matrix 22, there is a cell matrix monitor 62 comprised of a simulation cell matrix 22. The simulation cell matrix 22 is comprised of virtual cells such as simulation cells 82 equal in number to the burn cells in the burn cell matrix 22. Each burn cell in the burn cell matrix 22 forms a one-to-one correspondence with a simulation cell 82 in the simulation cell matrix 22. The simulation cell 82 on a screen 84 represents the flame 18 of the corresponding burn cell 12 as well as its status. In this way, each burn cell 12 can be monitored for its status in real time to determine if it is working properly and what is happening at the cell. The simulation cell 82 can also be disposed in each burn cell in the burn cell matrix 22. This adds further dimension to the feedback available to the trainee as he practices putting out the fire as well as to the instructor who has the capability then of watching the results of the training as evidenced by trainee behavior.

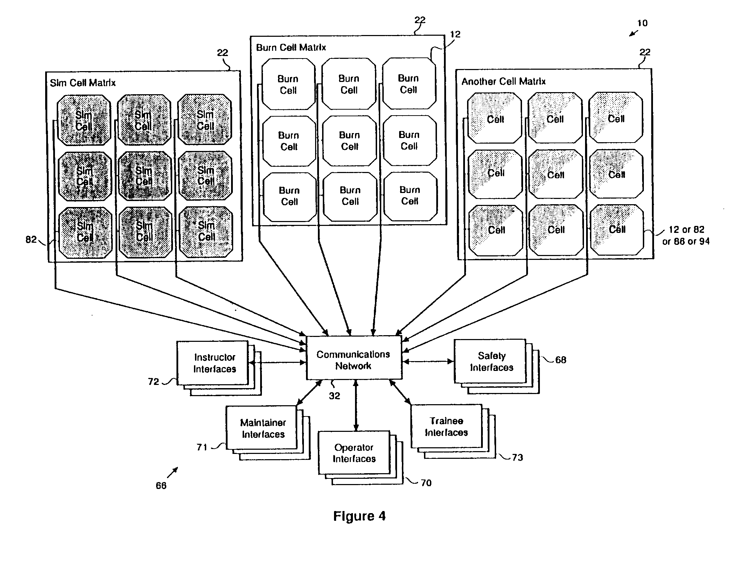

Interspersed with the burn cells 12 in the burn cell matrix 22, as shown in figure 4, or alternatively forming the entire burn cell matrix 22 are virtual cells such as indicator cells 86. An indicator cell 86 is very similar to a burn cell except for the fact that there is no flame 18 whatsoever nor any of the associated elements to create the flame such as the igniter 52, the valving 54 or the fuel itself. In place of those elements is an indicator 88 which is a representation of the flame 18 as depicted, ideally corresponding to the actual flame 18 or at least indicating its conditions such as height and intensity. The representation on the indicator 88 is controlled by the controller 20 and reacts in the same way to suppressant as the actual flame 18 would in regard to control of the valving 54 which controls the flow of fuel. The controller 20 in an indicator burn cell 86 receives signals from the sensors or other controllers 20 or from operator interactive module 70 or instructor interactive module 72 and forms the flame representation based on these inputs and the algorithms implementation in the electronic circuitry 26 of the indicator cell 86 controller 20. As more and more suppressant is placed on the thermocouple 48 in the indicator burn cell 86, the more the flame representation is caused to shrink to the point where it disappears and thus indicates that the flame 18 would have been extinguished.

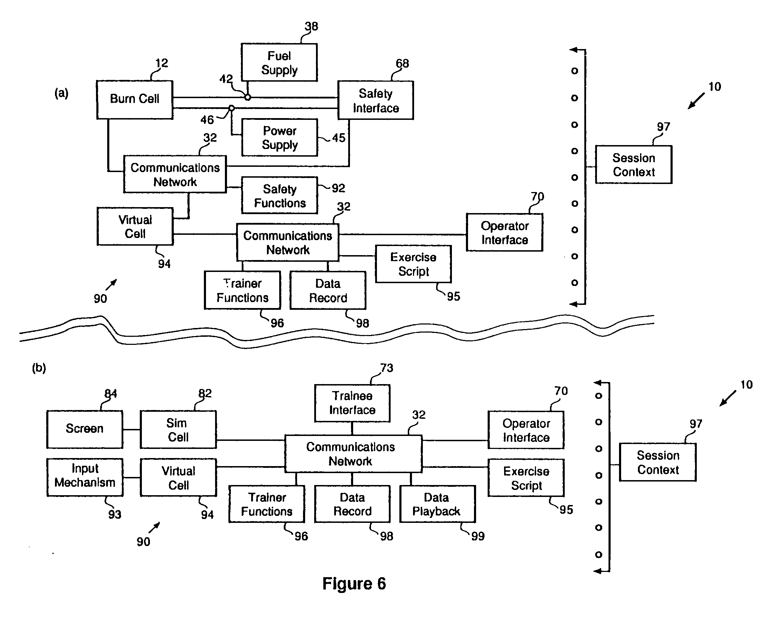

Alternatively, a fire fighter trainer 10 can be used that is entirely a simulation of training, an example of which is shown in figure 6b. In this instance, either an individual computer that serves as a virtual cell or an individual computer that serves as a virtual cell matrix 22 or a roomful of computers that together implement a virtual cell matrix 22 can be provided as a classroom for trainees. The trainees would then train in the simulator, through various inputs 93 that represent the applications of given suppressants and through various screens 84 that represent simulated fire conditions in the virtual cells. A pointing device, such as a mouse, or a keyboard can be used to direct where the flame is being placed. The pointing device or keyboard can be used to allow the trainee to move around within the simulated trainer and to simulate suppressant application, to go to various locations and experience different reactions. In this way, the trainee has more flexibility and freedom to attempt using different types of suppressants to see their reaction on the flame as well as practicing different types of training scenarios to learn what works and what does not, and if it does not, what are the ramifications.

Each trainer configuration is a distinct embodiment of the present invention. Trainer configurations range through a variety of crashed airplanes, burning structures, and industrial situations. Crashed airplanes can be positioned in or near pits that reproduce fuel spill fires. Incident fires can be installed at various locations throughout the airplanes, structures, and industrial mockups. Various incident fire configurations, along with other part-task training modules, can be installed in trailers and vans as mobile trainers.

When designing a trainer 10, the following considerations occur. Training requirements (such as what skills to teach, expected trainee throughput, curriculum) and funding profiles ($/yr) and available facilities are assessed. General trainer requirements are established based on these user institutional requirements. The general trainer requirements establish the type of trainer (pit, structural, incident, marine, industrial, chemical, . . .) as well as the physical configuration (# of burn cells, how they are arranged, how they are to interact with one another, number of classroom screens, . . . ). The general trainer requirements determine the instructional features and institution operational features that the trainer must support.

From these determinations, the actual system is derived: the modules required to support and implement each required feature are identified. The numbers and kinds of modules that must execute concurrently are identified. These two items, what modules and how many of each, together with the determinations of physical interactive interfaces determine the computational requirements and hence the computer organization for the trainer. Each module has a set of claims on execution resources that are known in the configuration library. Mapping modules to computers follows from the interface and burn cell layouts, and additional computers are configured in when the base computers cannot supply the total claimed execution resources.

Once the configuration is defined, modules are pulled from the configuration libraries and tested together in an execution environment. This environment can include special-built modules (that are not part of the product) that simulate missing pieces of the target trainer.

Finally, the trainer is assembled and the selected modules are tested on the physical trainer product. Once this test is passed, the modules are integrated into a product package and placed in the configuration library as a controlled entity.

Training pursuant to the trainer 10 can satisfy current National Fire Protection Association (NFPA) Professional Qualification Standards for Airport Fire Fighters (NFPA 1003) and Professional Qualification Standards for Fire Fighters (NFPA 1001). Trainers 10 can be built according to the current FAA Design Standards for an Aircraft Rescue and Firefighting Training Facility (Advisory Circular 150/5220-17A) and Title 14 of the Code of Federal Regulations Part 139, Aircraft Rescue and Firefighting: Operational Requirements.

Use of the term *training session* herein indicates the period of time during which a trainer is employed for training. A training session normally includes the following phases: session initiation, student prebrief, one or more training exercises, student postbrief, session termination.

Use of the term *training exercise* herein indicates the period of time during which training is conducted by means of interaction between students and a trainer.

Use of the term *training scenario* herein indicates a plan for a training exercise. For example, a training scenario would minimally define the fire's location (fuel spill, galley, ...) and the fire's characteristics (index, type of burning material, ...).

Use of the term *exercise script* herein indicates the text and data that defines how a trainer is to behave during a training exercise. A training scenario is implemented by *authoring* an exercise script, which exercise script is subsequently *interpreted* by the trainer during the training exercise.

Use of the term *trainer operations* herein indicates the operator and trainer actions necessary to execute training session functions. For a training exercise (which is, broadly speaking, a training session function) , operations minimally include: selecting an exercise script; launching the training exercise; optionally pausing, rewinding, fast-forwarding, and resuming exercise execution; and terminating the training exercise.

Every trainer 10 is built from a common core of standard hardware and software modules. Modules can be mixed and matched with one another in many combinations and permutations.

Each trainer configuration is individually configured from cells and interactive interface modules and other components.

Trainer capabilities can be upgraded incrementally. Modules are designed for easy retrofit into operational training devices, making modular growth a cost-effective way to improve training capabilities and to obtain new training features within the realities of annual training budgets.

In the preferred embodiment, there are five basic kinds of modules:

- *Cells* are autonomous, distributed nodes that work together to realize live or simulated fires.

    Burn Cells 12 are burner elements, sensors, control valves, fuel source connections, and electronics that create fire. Other kinds of Cells 82 and 86 and 94 simulate fires or otherwise represent the flame or flame conditions in manners useful for training, such as indicating simulated flame height or volume; flame temperature; cell temperature; agent applications including agent type, agent amount and direction of attack; location of flame equipment and personnel within cells, and so on.

- *Interactive Interface Modules 66* can be realized by computer input devices, computer monitors, computer windowing software, direct readouts and indicators (dials, lamps, LCDs, ...), direct input devices (buttons, keys, switches, ...), and hardware panels.

    Interactive Interface Modules 66 are used by instructional staff to operate trainers and to author exercise scripts. Safety officers use Interactive Interface Modules 66 to monitor live-fire exercises; and Interactive Interface Modules 66 allow any training exercise participant to shut down a live-fire trainer. Other Interactive Interface Modules 66 deliver instruction to students and allow instructional staff to observe, to react to, and to guide student behaviors.

- *Functional Objects* are the behind-the-scenes computer software, digital logic, analog circuitry, and hardware constructions that effect trainer operations, implement controller algorithms and instructional features, and manipulate training data.

- *Session Contexts* 97 are computer software, digital logic, analog circuitry, and hardware constructions that manage training sessions and coordinate the operations of all modules participating in those training sessions.
  Session Contexts are identified one-for-one with training sessions: each session has exactly one Session Context and each Session Context corresponds to exactly one training session.

- *Service Packages* are computer software, digital logic, analog circuitry, and hardware constructions that provide execution facilities available as services to other modules.
  As examples, Service Packages are used by modules: to communicate (such as via databases or across local area networks); to synchronize actions (such as via computer operating system primitives or via intermodule protocols); and to access computational resources (such as via operating system primitives to obtain CPU time, memory, and disk files).

In addition to the basic modules, a trainer 10 can also have fuel supplies, ventilation, waste treatment, control tower, pit, building or crashed aircraft, incident areas with cultural fixtures, and other hardware to mimic physical situations normally encountered when fighting fires.

Figure 6 shows pro forma module configurations and connections for trainers 10.

(a) Any live-fire trainer exercise minimally includes a Burn Cell 12, two Interactive Interface Modules 66 (one for safety 68 and one for operations 70), several Functional Objects (script interpretation 95, virtual cell for burn cell monitoring 94, exercise data recording 98, safety alerting 92, ...), and one Session Context 97.

(b) A desktop simulator replay of a live-fire exercise minimally includes a Cell 82 (fire simulation), two Interactive Interface Modules 66 (one for student feedback 73 and one for operations 70), several Functional Objects (script interpretation 95, exercise data playback 99, ...), and one Session Context 97.

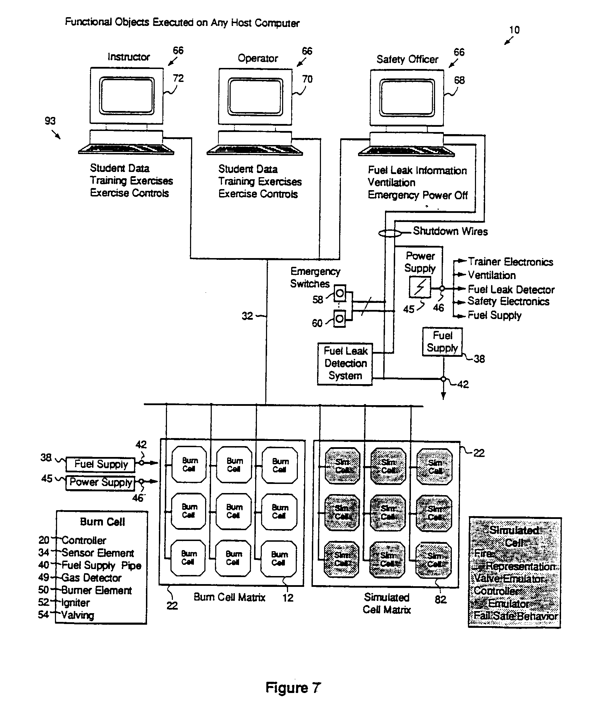

As another example of trainer 10, Figure 7 depicts a module configuration for a crashed aircraft fuel spill fire trainer.

In different trainers 10 a module can be implemented in alternative ways, each a distinct design for the module. Multiple type designs allow trainers to be offered at different price/performance levels and with ranges of (upgradeable) training features. Each trainer 10 can have its own unique design suited especially for that trainer's requirements.

A single trainer 10 can have multiple design implementations of the same module type. For example, a trainer could have both live-fire burn cell and simulated cell implementations. The live-fire hardware burn cells would be used for live-fire training, and the simulated cells would replay exercises for trainees in classroom feedback sessions. The simulated cells could also be on-line during the live-fire training, so an operator could oversee the trainer operation using the simulated cell representation of the live-fire burn area.

Any module implemented in computer software/hardware can be bound to computational resources based on trainer configuration and training exercise objectives. Also, such modules can share computational resources. This facility offers several advantages:

- A large number of distinct trainer configurations, each having judiciously chosen capabilities and price-performance, can be supported without rewriting software. The same software module that works on a single computer, for example, can also be used in loosely-coupled federated multiprocessor configurations and in tightly-coupled multiprocessor configurations.

- Multiple functions can be supported concurrently on the same hardware without rewriting the software. This is, of course, the essence of "windowing"; but the same principle applies across all modules.

- In multiple computer configurations, training can be supported even in the face of equipment failures. The same software modules that execute in a full-up trainer can execute at reduced performance levels in the degraded trainer.

Cells realize the live and simulated fires. There are two broad categories of Cells: the Burn Cell types 12 that actually make fire; and the Cell types that simulate or otherwise represent fire and conditions in or about fire training areas, called Cells 82 and 86 and 94.

In the preferred embodiment, each Burn Cell 12 is a self-contained "unit of fire" consisting of burner elements 50, igniters 52, control valves 54, and thermocouples 48. Each Burn Cell 12 is connected to a/the fuel supply 38 and has a dedicated controller 20 that opens and closes the Cell's burner element 50 control valves 54 in accordance with the Cell's thermocouple 48 signals. Control algorithm parameters, stored on the Burn Cell's controller 20, determine how the control valves 54 (and thus the flame 18) respond to the thermocouple 48 signals. Realism for different types of fires is achieved by pre-loading different sets of control algorithm parameters and selecting a particular set for each training exercise.

Multiple Burn Cells 12 can be assembled together into a burn cell matrix 22 to realize a fire that covers a large area (such as for fuel spills) or to realize multiple collocated fires (such as for incident fires). In either case, adjacent Burn Cells are connected together to enable realistic reproductions of spreading fires, reflashes, and the like.

Burn Cells 12 can be laid out over a pit and connected together into a Burn Cell Matrix 22 that reproduces the fuel spill fire. No central computer or operator panel is required. Rather, the controller 20 of adjacent Cells exchange signals about their local conditions. Each Cell controller 20 uses the signals from its neighbors (in addition to its own sensor signal and control algorithm parameters) to adjust its burner element control valves 54.

A single Burn Cell 12 can implement a fire scenario in one incident fixture. Burn Cells 12 for adjacent fixtures would form a Burn Cell Matrix 22 for the incident area. Burn Cells 12 for adjacent incident fixtures would exchange data similarly to adjacent Burn Cells 12 in a fuel spill fire.

Simulation Cells 82 and indicator cells 86 and virtual cells 94 can be implemented in computer software or by other means, such as image generators or personal computers. *Sim Cells* 82 can represent the fire in real-time as a plan view appearing on a computer monitor, as a three-dimensional image projected onto a two-dimensional viewing surface (by an image generator), or as a three-dimensional image (such as a virtual reality representation or a hologram produced by optical processing).

In one alternative embodiment, Sim Cells 82 can simply replace Burn Cells 12 one-for-one; so adjacent Sim Cells 82 are connected together into a Cell Matrix 22 analogously to Burn Cells 12 in a burn cell matrix 22. Sim Cells 82 can reside on dedicated electronic circuitry, shared electronic circuitry, dedicated host computers, or on shared host computers, depending on the computational horsepower and display hardware needed for the particular Sim Cell 82 implementations. Indicator cells 86 and virtual cells 94 can be similarly employed and similarly implemented.

Distinct Cell implementations can be mixed and matched. Matrices of Burn Cells and matrices of Sim Cells can coexist in a single trainer and they can cooperatively execute during a training exercise. Distinct Sim Cell implementations can similarly coexist and cooperate. A trainer can have Sim Cell 82 or indicator cell 86 or virtual cell 94 counterparts to the trainer's Burn Cells 12. Using such cells in lieu of or concurrently with Burn Cells yields advantages, among them:

- Trainer software can be fully designed, implemented, and tested in the lab without the live-fire hardware.

- Burn Cell development and software integration with the Burn Cell hardware can proceed in a decoupled, low-risk manner.

- Trainer prototypes can be configured (and reconfigured) rapidly for training analysis studies, for proofing new trainer features, and for customer design approvals.

- Instructional materials and training exercises can be constructed and verified at remote authoring sites and distributed to using sites.

- Training exercise prebriefs for familiarization and for instruction can be conducted, without actual fires.

- Sim Cells 82 and indicator cells 86 and virtual cells 94 (with whatever representations of the fires) can recapitulate the behaviors of the Burn Cells 12 during training session replays.

- Sim Cells 82 and indicator cells 86 and virtual cell 94 can maintain visual reports of conditions at the Burn Cells 12 during training exercises.

- Sim Cells 82 and indicator cells 86 and virtual cells 94 can report on diagnostic conditions during readiness checks and maintenance sessions.

In the preferred embodiment, *Fire profiles* specialize Cell behaviors. Each Cell type has its own fire profile format:

- For a Burn Cell 12 a fire profile is a set of control algorithm parameter values that determine exactly how a Burn Cell 12 controller 20 (a) controls the Cell's igniter 52 and (b) opens and closes the Cell's burner element control valves 54; (a) and (b) both in response to (i) the Cell's thermocouple 48 signal and (ii) the fire conditions in adjacent Cells via communication network 32 signals from adjacent controllers 20, as shown in figure 8.

- For a Sim Cell 82 and indicator cell 86 and virtual cell 94, a fire profile is a set of control algorithm parameter values that determine exactly how the simulated fire is to be represented in response to the exercise script, recorded exercise data, and condition signals output by adjacent cells and local sensors.

Multiple fire profiles, each a distinct set of parameter values, are stored in the Cell 12 and 82 and 86 and 94. Cells 12 and 82 and 86 and 94 can be permanently preloaded with one or more fire profiles. Alternatively, fire profiles are downloaded (from Functional Objects) prior to training sessions. When a Cell 12 and 82 and 86 and 94 is commanded to enter into a training exercise, one of the preloaded fire profiles is directed for use in that training exercise.

The fire profile parameters do not have to include "fire growth rate" or "fire spread rate" or "extinguishment difficulty level". Nor, in fact, will the control algorithms have to employ any mathematical entities that represent fire growth rate, fire spread rate, or extinguishment difficulty level. In the trainer 10 fire growth rate, fire spread rate, and extinguishment difficulty are just physically observable effects that result from the autonomous local operations of the each of the Burn Cells 12 in a Burn Cell Matrix 22.

In the preferred embodiment, the operator (or more precisely, the exercise script that is selected by the operator for the training session) can select the fire for the training exercise by specifying the fire site (the incident area or fuel spill sections at which the fire is to occur), the fire index (which can indicate the size of the fire), the fire state (such as incipient, flame spread, hot smoldering, flashover, steady state, and clear burning), and some attributes that further characterize the selected fire state. These operator selections are in turn distilled (by Functional Objects) into: (1) the set of Burn Cells that are to be enabled for the training exercise, (2) the Burn Cell at which the fire is to initiate, and (3) the appropriate fire profile(s) for the selected Burn Cells.

Each Cell 12 or 82 or 86 or 94 operates autonomously during a training exercise, based on its local sensors, fire profile, and conditions at adjacent Cells. As a Cell 12 operates in the preferred embodiment, the cell 12 communicates status to and receives data from (one or more) associated *Virtual Cell* 94 Functional Objects. All Interactive Interfaces Modules 66 and all Functional Objects (other than Virtual Cells) communicate with Cells via Virtual Cells 94. Under direction of other Functional Objects, Virtual Cells 94 allocate Cells 12 to training exercises, enable Cell activations in training exercises, download fire profiles, and designate fire profiles to be used for training exercises. Virtual Cells 94 reflect the operating states of the Cells 12 under their purview, providing status data upon request to Interactive Interface Modules 66 and to other Functional Objects.

Virtual Cell 94 Functional Objects are software/hardware entities that can implemented by Burn Cell controllers 20, by electronic circuitry dedicated to one or more Virtual Cells 94, or on host computers. Each Virtual Cell communicates with its associated Cells 12 or 82 or 86 via the communications network 32. In other embodiments, the functions of the virtual cell functional objects can be accomplished by the cells 12 or 82 or 86 in lieu of the virtual cells 94.

In one embodiment, each Virtual Cell 94 is associated with one or more Burn Cell 12 and/or Sim Cell 82 or indicator cell 86. Each Cell 12, 82 or 86 is associated with one or more Virtual Cells. Typically a Cell 12, 82 or 86 will have one associated Virtual Cell on every host computer that (hosts an Interactive Interface Module 66 or Functional Object that) needs to communicate with that Cell 12, 82 or 86. For example, in the Figure 7 example fuel spill trainer 10 the Safety Interface Module 68 and Operator Interface Module 70 are hosted in distinct computers. Each of the example trainer's Burn Cells 12 has an associated Virtual Cell 94 in the Safety Interface host computer and another associated Virtual Cell 94 in the Operation Interface host computer.

Many-to-many mappings between Cells 12, 82 or 86 and Virtual Cells 94 addresses the central problem inherent in all "modular" schemes: how to configure, rehost, and dynamically migrate function without recoding, reworking, or reinstantiating the "standard" modules or their "standard" interfaces. The Burn Cell - Virtual Cell design admits a broad range of control regimes, operating configurations, and performance options all of which are immediately achievable with no recoding or rework of any standard modules.

A few examples of the possibilities afforded by the design.

- Multiple Interactive Interface Modules 66 can coexist and simultaneously operate individual Cells, all Cells 12 within a partitioned subset of a Matrix 22, or all Cells 12 (in a Cell Matrix 22) as a single unit.

Coexisting Instructor 72, Operator 70, and Safety 68 Interfaces (each an instance of a particular Interactive Interface Module 66) shown in the Figure 7 fuel spill trainer is one example. The trainer control tower has: (a) a safety officer hardware control panel that connects to the electrical and propane distribution overrides; (b) a computer-hosted safety officer console that monitors burn area conditions; and (c) an operator's console from which training sessions are launched and exercise progress is observed.

- Instructors, collocated with the trainees in live-fire areas, can monitor fire progress independently and concurrently with operators and safety officers (who are in the control tower) using a portable, two-way Interactive Interface Module 66, called a *FireDirector.*

  This Interactive Interface Module 66 communicates with the host computers and/or dedicated electronic circuitry, which in turn implement the Virtual Cells 94 and other Functional Objects that operate the trainer and communicate with the Cell Matrix 22.

  Portable interactive interfaces 66 such as FireDirectors can "join in" as exercises are in progress. In the Figure 7 fuel spill example, instructors can move among training exercises using their FireDirectors to determine the exact fire conditions, to advise trainee fire fighting teams of their progress, to recommend alternative courses of action, and to adjust fire conditions in response to (proper or improper) trainee fire fighting behaviors.

- A single Burn Cell 12 can be joined with one or more FireDirectors (for operators and instructors) and safety control panels to realize low-end live-fire trainers. These low-end single Burn Cell trainers require no non-recurring expenditures beyond that necessary for employing the Burn Cells, FireDirectors, and safety panels already found in the high-end fuel spill and incident fire trainers.

A live-fire trainer must have at least one Burn Cell 12. In fact most live-fire trainers (other than, perhaps, low-cost configurations for single incident fires) will have several Burn Cells 12. By nature of the design, spreading fires are only realizable by assembling several Burn Cells 12 together into a Cell Matrix 22. Therefore, all fuel spill configurations must have more than one Burn Cell 12. Most incident fire trainers will also have more than one Burn Cell 12.

In one embodiment, there is only one incident fire comprised of one Burn Cell 12 and a few FireDirectors. In this configuration, the single Burn Cell is joined with a safety control panel (electrical and propane distribution overrides for the safety officer) and FireDirectors (exercise operations and burn area status for instructor/operators). There is no control tower involved. Safety officer and instructor/operators are located "on-the-ground" with the trainee fire fighting teams.

Each controller 20 of each Burn Cell 12 exchanges status data through the communication network 32 with at least one Virtual Cell 94 that is associated with the Burn Cell 12. Subsets of Burn Cells 12 in a Burn Cell Matrix 22 can operate independently of and concurrently with other subsets of Burn Cells 12 in the same Burn Cell Matrix 22. Corresponding Virtual Cells 94 in distinct training exercises enable the independent operation of the Burn Cell subsets.

Cells 12 can be built with a variety of features and options. For example, Cells can be equipped with personnel detectors/locators that permit trainer behaviors based on the fire fighter location and movement in and through a cell matrix 22. Using more or less dense distributions of thermocouples and other sensors within Cells, fires could be reproduced to higher or lower levels of fidelity based on cost/performance and training objective considerations. Cells could be loaded with distinct fire profiles, based on the training exercise, that would cause the fire to behave as if it were being attacked with a particular array of extinguishing agents; so that the application of distinct extinguishing agents could be simulated without using agent detectors.

In the preferred embodiment, Interactive Interface Modules 66 are the primary means by which training institution staff members and trainees communicate with the trainers and access training features and capabilities. As with Cells, there can be any number of Interactive Interface Module 66 types.

Interactive Interface Modules 66 can be implemented in dedicated hardware or in computer software and hardware, depending on function and available computational resources. When implemented in dedicated hardware an Interactive Interface Module 66 will usually be a physically separate control panel or hand-held device containing direct readouts and indicators (such as dials, lamps, LCDs, ...) and direct input devices (such as buttons, keys, switches, ...). When implemented by software/hardware, an Interactive Interface Module 66 will usually be a distinct (set of) windows appearing on a computer monitor together with computer input devices (such as a keyboard and trackball).

As with other modules that are implemented in computer software/hardware, computer monitor Interactive Interfaces Modules 66 are bound to computational resources based on trainer configuration and training exercise objectives. In one trainer 10, an Interactive Interface Module might share a computer monitor with other Interactive Interfaces Modules; in another trainer 10 a functionally identical Interactive Interface Module might reside on a dedicated computer monitor and might execute on a dedicated computer. Even on the same trainer a particular Interactive Interface might be implemented by alternative means, residing on a dedicated computer monitor for certain training exercises and residing on a shared computer monitor at another operator station for other training exercises.

Each Interactive Interface Module 66 is organized around a major safety, operational, or training function. Interactive Interface Modules 66 are independent of one another and they can operate in parallel, simultaneously controlling the same trainer operations. Interactive Interface Modules can be disposed throughout a trainer -- such as in a cell matrix 22, at a central station 56 and/or at a monitor station 57 -- as required by training exercise objectives, training methodologies, instructional techniques, available instructional staff, and safety. The exact Interactive Interface Module configuration for a trainer is determined through training analyses and customer interactions. Generally trainers are operated through multiple stations, each station having one or more control panels, each control panel of which implements one or more Interactive Interface Modules.

Any Interactive Interface Module 66 can include any number of interface modules. Among them: safety interface modules 68, operator interface modules, instructor interface modules 72, trainee interface modules 73 and maintainer interface modules 71.

Safety Interface Modules 68 are used by safety officers to monitor fire conditions. All training exercise participants - safety officers, trainer operators, instructors, trainees - use Safety Interface Modules 68 to shut down training exercises should emergencies or dangerous conditions arise.

For example, *FailSafe control panels* are Safety Interface Modules 68 consisting of large status indicators and push buttons that are easily operated when wearing turnout gear. FailSafe control panels are disposed in prominent locations throughout a live-fire trainer. These self-contained control panels connect directly to fuel shutoff mechanisms 42 and power shutoff mechanisms 46.

There can be other types of Safety Interface Modules 68, including sophisticated computer-generated status displays.

Operator interface modules 70 are used by operators to conduct training sessions and training exercises. During live-fire training exercises, for example, operators use operator interface modules 70 to select exercise scripts, to monitor burn status, and to terminate exercises.

Functions that are accomplished at operator interface modules 70:

- Trainer log-on, session selection (such as among training, authoring, record keeping, maintenance, daily readiness, joint operations with other trainers), and log-off.

- Session control (such as for training, authoring, record keeping, maintenance, daily readiness sessions).

- Exercise script authoring.

- Joint operations set-up and control, such as joint operations with other fire fighter trainers.

Instructor Interface Modules 72 implement instructional features. Training institution staff members use Instructor Interface Modules 72 to monitor student performance and to alter exercise conditions in response to observed student behaviors. For each session type, there will generally be several types of Instructor Interface Modules 72, each of which provide a major instructor function such as monitoring trainee behaviors, "on-the-ground" control of the training exercise, or monitoring trainer conditions.

Trainee Interface Modules 73 deliver instruction to students. Trainee Interface Modules 73 provide prebrief, postbrief, and feedback functions.

Maintainer Interface Modules 71 provide maintenance personnel with direct controls for checking and adjusting trainer hardware such as burn cell 12, control valves 54, igniters 52, thermocouples 48 and 28, and controller 20. Maintainer Interface Modules 71 provide failure monitoring and fault diagnosis.

As shown in figure 7, the preferred embodiment has at least two Interactive Interface Modules 66. One Interactive Interface Module 66 contains a Safety Interface Module 68 and Interactive Interface Module 66 contains an Operator Interface Module 70. Safety Interface Modules 68 are implemented separately and apart from Operator Interface Modules 70 to provide uninterrupted oversight objects to the safety officer. The interface modules 68 and 70 connect either to power and propane sources (safety 68) or to a host computer (operator 70) or to dedicated electronic circuit (operator 70). All information, data and signals passing between an interface module 68 and 70 and a Cell 12 or 82 passes through at least one Virtual Cell 94. Safety interface modules connect directly to power and propane sources.

Functional Object modules effect trainer operations, implement instructional features, and manipulate trainer data. Functional Objects are the primary means by which trainer component designs are organized and by which trainer component functions are coordinated. Each Functional Object is a self-contained unit having a well-defined functionality and standard interfaces to other modules. A Functional Object can be implemented on dedicated hardware or as a combination of computer software and hardware. Functional Objects generally represent the physical objects, computational resources, simulation devices, and functional capabilities that comprise a trainer.

Functional Objects represent entities and implement features such as:

- Virtual Cells 94

- training exercises, exercise libraries, and exercise interpretation

- jointly operating (local) training sessions

- jointly operating (other) trainers

- condition and event detection; and generation of resulting instructional alerts, prompts, and cues

- trainee record keeping

- trainer hardware and logistics records

- student, instructor, and trainer schedules

- training guidance for lesson selection, for remediation, and for diagnostic programs

Functional objects are independent of one another. They can be disposed throughout a trainer as required by training exercise objectives, training methodologies, instructional techniques, available instructional staff, and safety.

Just as with other modules, a Functional Object can be realized by an array of alternative means. In one trainer 10, a Functional Object might share a computer with other Functional Objects; in another trainer 10 a functionally identical Functional Object might execute on its own dedicated computer. Even on the same trainer a particular Functional Object might be implemented by alternative means, residing on a dedicated computer for certain training exercises and residing on a shared computer for other training exercises.

Session Context modules 97 organize and orchestrate trainer operating sessions. A Session Context 97 configures together the Cells 12, Functional Objects, Interactive Interface Modules 66 and Service Packages that constitute a training session. Once a trainer is configured for a session, its Session Context 97 controls overall session execution, monitors the health of the session's constituent modules, takes corrective actions in case of module failures or errant behaviors, and responds to alerts from safety monitoring equipment. At session termination, the session's Session Context 97 returns all session constituents to known quiescent states so that they may be used in subsequent sessions.

Session Contexts 97 are independent of one another. Each session has its own Session Context 97. Multiple Session Contexts 97 (and hence multiple sessions) can execute concurrently as long as the concurrent sessions do not attempt to share trainer modules.

Service Package modules collect together implementations of low-level operations that are commonly used by several (more than one) module. Service packages allow such "internals" to be implemented once for use by all modules, avoiding the obvious duplication of effort that would otherwise obtain.

Service Packages provide access to computational resources and facilities. For example, modules use Service Packages for inter-computer communications, exercise data storage and retrieval, computer monitor window operations, exercise script manipulations, and network communications. Service Packages allow disparate modules to deal in common ways with such resources and artifacts. Moreover, Service Packages prevent unwarranted breakage, allowing modules to be ported easily across diverse computer platforms. For example, when porting from one host computer type to another, Service Packages may change in order to access the new host's computational resources and facilities. Users and the Service Package Modules would not change in such a port; they would simply (continue to) use the (new) implementations of the (same) Service Packages.

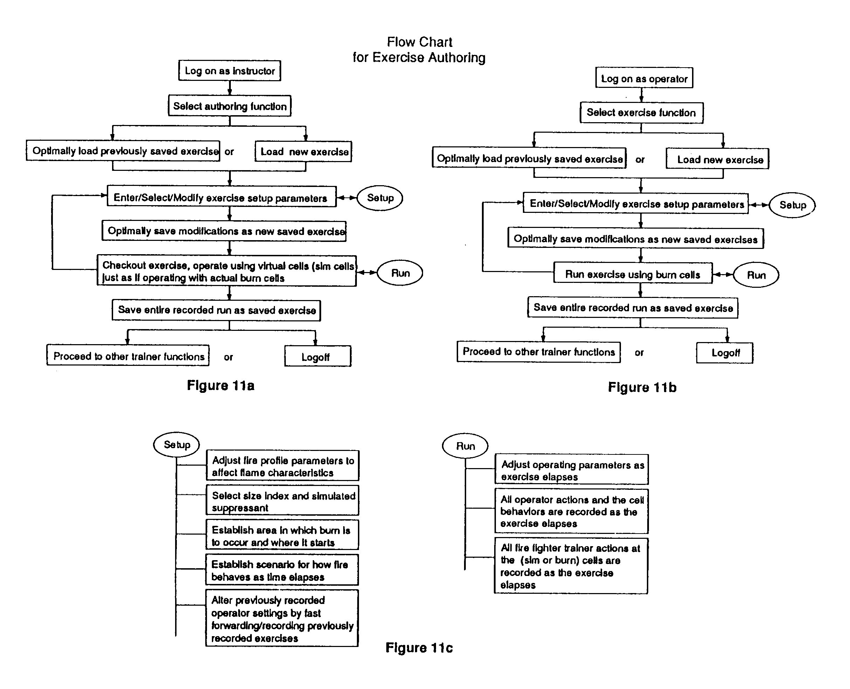

In order to create training scenarios, the following steps generally occur, as shown in figure 11. In regards to an instructor, the instructor logs on and enters into communication with an instructor interface module. The instructor then selects the authoring function. Optionally, the instructor can load previously saved exercises or load a pro forma new exercise. Then, the instructor enters/selects/modifies the exercise set-up parameters. This can include adjusting the fire profile parameters to affect flame characteristics, select the size index and simulator suppressant, establish the area in which the burn is to occur and where the burn starts, establish scenarios for fire behavior as time elapses and alter previously recorded operator settings by fastforwarding/rewinding previously recorded exercises.

Next, the instructor can save the modifications as a new exercise. Next, the instructor checks out the exercise, operating the trainer using virtual cells (such as Sim Cells) just as if operating with actual burn cells. This can include adjusting the operator parameters as the exercise elapses, recording all operator actions and the cell behaviors as the exercise elapses, and recording all fire fighter trainer actions at the given burn cells as the exercise elapses.

Next, the instructor saves the entire recorded exercise. Next, the instructor proceeds to other trainer functions. Finally, the instructor logs off.

In addition to instructors at instructor interface modules, training scenarios can also be used by operators. In these cases, the same actions identified for instructors can be used by operators, except instead of the step of checking out

19

the exercise, etc., the operator runs the exercise using the burn cells.

The present invention pertains to a method for operating a first cell 12 of a fire fighter trainer 10. The method comprises the steps of activating a controller 20 in the first cell 12. Then there is the step of igniting a flame 18 in the first cell 12. Next there is the step of sensing conditions about the first cell 12. Then there is the step of informing the controller 20 of the conditions about the first cell 12. Next there is the step of informing the controller 20 of the conditions about a second cell 14 disposed adjacent the first cell 12. Next there is the step of changing the flame 18 as a function of conditions about the first cell 12 and the second cell 14. These steps are more fully explained above in terms of how they are carried out and the various ways they can be applied.

The present invention also pertains to a method of training a trainee about fire fighting. The method comprises the steps of establishing a training scenario for a fire fighter trainer. Next there is the step of introducing the trainee to the fire fighter trainer 10. Then there is the step of conducting a training session using the training scenario in the fire fighter trainer 10. Next there is the step of recording actions of the trainee as the trainee responds to the training scenario. Then there is the step of replaying the recorded actions in a simulated cell. The step of recording actions of trainee as the trainee responds to the training scenario can include storing the individual signals that pass over the communications network or occur inside the cell so that each parameter or aspect of the trainer as well as the actions of the trainee can be recorded. In such an instance, when the replaying step occurs, then all information about the cell is available to be studied and reviewed in a simulated cell that can show the different parameters as the replay unfolds.

The replaying step can include the step of providing inputs to the simulated cell to vary the replay of the recorded actions to identify alternative responses to the training scenario. These alternative responses can be evoked by way of keys on the keyboard that cause the replay to deviate from the actual events and instead allow the trainee to see what would be an alternative result for a given action had he chosen it instead of the action that he actually performed. Thus, if instead of placing a suppressant on a certain area of the burn cell for a given period of time, the trainee in the simulated cell can instead cause the suppressant to be placed in a different location in the cell by, for instance, using a mouse to direct where the suppressant should be placed and then changing the function key to cause the suppressant to be positive on the burn cell in the desired location. The simulated cell would then process this information and indicate what result would occur in regard to the flame and possibly the heat about the cell as well as the presence of oxygen, etc. are on the cell.

The replaying step can include the step of picking parameters from the fire fighter trainer 10 which have been recorded, and using the parameters to define a new training scenario. Thus, as a shortcut or as a way of creating a desired scenario in the trainer, just as the different signals and parameters were recorded from the fire fighter trainer at a given time, they can be stored so they can be reintroduced and caused to be recreated at a given instant in the simulator.

The step of establishing the training scenario for the fire fighter trainer can include the step of authoring a training scenario for the fire fighter trainer. This authoring step is described above. Additionally, after the establishing step, there can be the step of receiving the training scenario in a simulated cell or cell matrix. In this way, the training scenario can be executed in a simulated cell to check if it performs the desired training or tested to ensure that the necessary safety of the trainee is present.

Although the invention has been described in detail in the foregoing embodiments for the purpose of illustration, it is to be understood that such detail is solely for that purpose and that variations can be made therein by those skilled in the art without departing from the spirit and scope of the invention except as it may be described by the following claims.

## Claims

1. A fire fighter trainer 10 characterized by:
   a first burn cell 12 and a second burn cell 14 disposed adjacent to the first burn cell 12, each burn cell 12 having a burner mechanism 16 for producing a flame 18 and a controller 20 which controls the burner mechanism 16, said first and second burn cells 12, 14 together form a burn cell matrix 22.

2. A trainer 10 as described in claim 1,
   characterized by the fact that the burner mechanism 16 includes a mechanism 24 for providing fuel to the burner mechanism 16 to produce the flame 18.

3. A trainer 10 as described in claim 2,
   characterized by a sensor mechanism 30 for sensing conditions about the burn cell matrix 22 and producing sensor signals corresponding to the conditions, which signals are received by the controllers 20 of the burn cells 12, said sensor mechanism 30 being in communication with the controllers 20 of the burn cells 12, said controller 20 of each burn cell 12 controlling the associated burner mechanism 16 based on the sensor signal it receives and on the algorithm implemented by its electronic circuitry 26.

4. A trainer 10 as described in claim 3,
characterized by the fact that the sensor mechanism 30 includes a first sensor element 34 disposed at the first burn cell 12 which senses conditions about the first burn cell 12 and produces a first sensor signal corresponding to the conditions about the first burn cell 12, said first sensor element 34 being in contact with the controller 20 of the first burn cell 12 so the controller 20 can receive the first sensor signal and can control the burner mechanism 16 of the first burn cell 12 based on the first sensor signal and on the algorithm implemented by the controller's 20 electronic circuitry 26; and includes a second sensor element 36 disposed at the second burn cell 14 which senses conditions about the second burn cell 14 and produces a second sensor signal corresponding to the conditions about the second burn cell 14, said second sensor element 36 being in contact with the controller 20 of the second burn cell 14 so the controller 20 can receive the second sensor signal and can control the burner mechanism 16 of the second burn cell 14 based on the second sensor signal and on the algorithm implemented by the controller's electronic circuitry 26.

5. A trainer 10 as described in claim 4,
characterized by a communications network 32, said first burn cell 12 and said second burn cell 14 being in contact with the communications network 32 and in communication with each other through the communications network 32.

6. A trainer 10 as described in claim 5,
characterized by the fact that each controller 20 produces a controller signal corresponding to its burn cell's 12 state, said controller signal being provided to the other controller 20, each controller 20 controlling its associated burner mechanism 16 based on the controller signal it receives from the other controller 20, and on the sensor signal, and on the algorithm implemented by the controller's electronic circuitry 26.

7. A trainer 10 as described in claim 6,
characterized by the fact that the mechanism 24 for providing fuel includes a fuel supply 38 and piping 40, connected to the fuel supply 38 and connected to the burner mechanisms 16 of the first and second burn cells 12, 14, through which fuel for flame 18 flows.

8. A trainer 10 as described in claim 7, characterized by the fact that the mechanism 24 for providing fuel includes a fuel shut-off mechanism 42 connected to the piping 40 which, when activated, stops flow of fuel from the fuel supply 38 to the burner mechanisms 16 of the first and second burner cells 12, 14.

9. A trainer 10 as described in claim 8,
characterized by the fact that the mechanism 44 for providing power includes a power distribution network connected to the first and second burn cells 12, 14 to provide electricity to the first and second burn cells 12, 14.

10. A trainer 10 as described in claim 9,
characterized by the fact that the power distribution network includes a power shut-off mechanism 46 which, when activated, stops electricity from flowing to the first and second burn cells 12, 14.

11. A trainer 10 as described in claim 10,
characterized by the fact that the sensor element 34 includes a thermocouple 48 which detects the temperature at its burn cell 12, and the sensor signal includes information about the temperature of the burn cell 12.

12. A trainer 10 as described in claim 11,
characterized by the fact that the burner mechanism 16 includes a burner element 50 connected to piping 40 in which fuel flows with the fuel being ignited at the burner element 50 to produce the flame 18, with an igniter 52 adjacent to the burner element 50 to ignite the fuel to create the flame 18, and with valving 54 connected to the piping 40 and the controller 20 which adjusts the flow of fuel to the burner element 50 based on a controller 20 signal.

13. A trainer 10 as described in claim 12,
characterized by a burn cell monitor 62 connected to the communications network 32 which receives signals from each controller 20 to monitor each burn cell 12.

**14.** A trainer 10 as described in claim 13,
characterized by at least a first interactive interface module 66 in communication with the communication network 32 and disposed in the burn cell matrix 22 to monitor the burn cell matrix 22 and to monitor the training and to produce interface module signals to provide a desired burn cell controller 20.

**15.** A trainer 10 as described in claim 14,
characterized by the fact that the first interactive interface module 66 includes a safety interface 68 disposed in the burn cell matrix 22 and a second fuel shut-off activation switch 74 of the fuel shut-off mechanism 42 disposed in the safety interface 68, and a second power shut-off activation switch 74 of the power shut-off mechanism 46 disposed in the safety interface 68.

**16.** A trainer 10 as described in claim 15,
characterized by the fact that the fist interactive interface module 66 includes an operator interface 70, which is an interactive interface module 70, disposed in the burn cell matrix 22 to initiate training sessions and training exercises and to monitor burn cells 42, said operator interface 70 being in communication with the communications network 32.

**17.** A trainer 10 as described in claim 16,
characterized by the fact that the first interactive interface module 66 includes an instructor interface 72 disposed in the burn cell matrix 22 to monitor trainee behaviour during a training exercise.

**18.** A trainer 10 as described in claim 17,
characterized by the fact that the first interactive interface module 66 includes a training interface 73 disposed in the burn cell matrix 22 which delivers training to trainees.

**19.** A trainer 10 as described in claim 18,
characterized by the fact that the first interactive interface module 66 includes a maintainer interface 73 disposed in the burn cell matrix 22 to maintain the condition of the burn cell matrix.

**20.** A fire fighter trainer 10 characterized by:
a burn cell matrix 22 comprising N burn cells, where $N \geq 2$ and N is an integer, each burn cell having a burner mechanism 16 to produce a flame 18 and a controller 20 which is in communication with the burner mechanism 16 and controls the flame 18.

**21.** A fire fighter trainer 10 characterized by:
a first burn cell 12 and a second burn cell 14, each having: a burner mechanism 16 which produces a flame 18; a sensor mechanism 30 which senses conditions about the cell and produces a sensor signal corresponding to the conditions; a controller 20 in contact with the sensor mechanism 30, with the controller 20 of the other burn cell 12, and with the burner mechanism 16; the controller 20 to control its burn cell's flame 18 based on the sensor signal the controller 20 receives from the sensor mechanism 30, on a controller signal it receives from the controller 20 of the other burn cell 12, and on an algorithm implemented in the controller's 20 electronic circuitry 26; said controller 20 producing a controller signal based on signals it receives and on an algorithm implemented by its electronic circuitry 26; and a mechanism 24 for providing fuel to the burner mechanism 16 to produce the flame 18.

**22.** A fire fighter trainer 10 characterized by:

a burn cell matrix 22 having at least one burn cell 12 which produces a flame 18, each burn cell 12 having a status; and
a virtual cell matrix 90 which corresponds to the burn cell matrix 22, said virtual cell matrix 22 having at least one virtual cell 94 corresponding to at least one burn cell 12 in the burn cell matrix 22, said virtual cell 94 showing the status of the corresponding burn cell 12.

**23.** A fire fighter trainer 10 characterized by:

a virtual cell 94 that represents a flame 18 and that coordinates the representation of the flame 18 with actions of a user; and
an input mechanism 93 through which the actions of the user are conveyed to the virtual cell 94, said input mechanism 93 connected to the virtual cell 94.

**24.** A fire fighter trainer 10 characterized by:

a burner mechanism 16 for producing a flame 18; and
a closed loop control system for the burner mechanism 16, said control system in communication with the burner mechanism 16.

**25.** A trainer 10 as described in claim 24,
characterized by the fact that the control system includes a sensor mechanism 30 which determines at least one attribute of the flame 18.

**26.** A trainer 10 as described in claim 25,
characterized by the fact that the sensor mechanism 30 includes an infrared detector 89 which detects the size of the flame 18 and produces a size signal.

**27.** A fire fighter trainer 10 characterized by:

a burn cell matrix 22 comprising a plurality of burner mechanisms 16 which produce a flame 18; and
a control mechanism 91 for providing distributed control over the burner mechanisms 16 and flames 18 they produce and their safe operation, said control over their safe operation being separate and distinct from the control over the burner mechanisms 16 and the flames 18 they produce.

**28.** An operator interface 70 for a fire fighter trainer 10 characterized by:

a portable housing 107;
a controller 20 disposed in the housing 107;
a transmitter 109 disposed in the housing 107 for transmitting signals from the controller 20, said transmitter 109 being connected to the controller 20;
a receiver 111 disposed in the housing 107 for receiving signals for the controller 20, said controller 20 connected to the receiver 111.

**29.** A fire fighter trainer 10 characterized by:
a first cell 12 and a second cell 14 disposed adjacent to the first cell 12, each cell 12 having a burner mechanism 16 for producing a flame 18 and a controller 20 which controls the burner mechanism 16, said first and second burn cells 12, 14 together forming a burn cell matrix 22.

**30.** A fire fighter trainer 10 characterized by:
a first cell 12 and a second cell 14 disposed adjacent to the first cell 12, each cell 12 having a mechanism for producing an output for training a fire fighter and a controller 2 which controls the mechanism, said first and second cells 12, 14 together forming a cell matrix 22.

**31.** A method for operating a first cell 12 of a fire fighter trainer 10 characterized by:

activating a controller 20 in the first cell 12; igniting a flame 18 in the first cell 12;
sensing conditions about the first cell 12;
informing the controller 20 of the conditions about the first cell 12;
informing the controller 20 of the conditions about a second cell 14 disposed adjacent the first cell 12; and
changing the flame 18 as a function of conditions about the first cell 12 and about the second cell 14.

**32.** A method of training a trainee about fire fighting characterized by the steps of:

establishing a training scenario for a fire fighter trainer 10;
introducing the trainee to the fire fighter trainer 10;
conducting a training session using the training scenario in the fire fighter trainer 10;
recording actions of the trainee as the trainee responds to the training scenario; and
replaying the recorded actions in a simulated cell 82.

**33.** A method as described in claim 32,
characterized by the fact that the replaying step includes the step of providing inputs to the simulated cell 82 to vary the replay of the recorded actions to identify alternative responses to the training scenario.

34. A method as described in claim 33,
characterized by the fact that the replaying step includes the step of picking parameters from the fire fighter trainer 10 which have been recorded and using the parameters to define a new training scenario.

Figure 1
A Burn Cell Matrix

25

Figure 2
A Burn Cell

Figure 3
Burn Cell Matrix

Figure 4

EP 0 718 815 A1

Figure 5

(a)

(b)

**Figure 6**

Functional Objects Executed on Any Host Computer

Figure 7

Figure 8
Controller Algorithms

Figure 9

Figure 10

## Flow Chart for Exercise Authoring

**Figure 11a**

- Log on as Instructor
- Select authoring function
- Optimally load previously saved exercise — or — Load new exercise
- Enter/Select/Modify exercise setup parameters ← (Setup)
- Optimally save modifications as new saved exercise
- Checkout exercise, operate using virtual cells (sim cells) just as if operating with actual burn cells ← (Run)
- Save entire recorded run as saved exercise
- Proceed to other trainer functions — or — Logoff

**Figure 11b**

- Log on as operator
- Select exercise function
- Optimally load previously saved exercise — or — Load new exercise
- Enter/Select/Modify exercise setup parameters ← (Setup)
- Optimally save modifications as new saved exercises
- Run exercise using burn cells ← (Run)
- Save entire recorded run as saved exercise
- Proceed to other trainer functions — or — Logoff

**Figure 11c**

(Setup)
- Adjust fire profile parameters to affect flame characteristics
- Select size index and simulated suppressant
- Establish area in which burn is to occur and where it starts
- Establish scenario for how fire behaves as time elapses
- Alter previously recorded operator settings by fast forwarding/recording previously recorded exercises

(Run)
- Adjust operating parameters as exercise elapses
- All operator actions and the cell behaviors are recorded as the exercise elapses
- All fire fighter trainer actions at the (sim or burn) cells are recorded as the exercise elapses

34

EP 0 718 815 A1

Activating controller
first cell

↓

Igniting flame is cell

↓

Sensing conditions
about cell

↓

Informing controller
of conditions about
cell

↓

Informing controller
of conditions about
a second cell

↓

Changing Flame based
on conditions about first
and second cell

**Figure 12**

Authoring training
scenario

↓

Previewing training
scenario in sim cell
matrix

↓

Introducing trainee
into trainer

↓

Conducting training
session using
scenario

↓

Recording actions of
trainees

↓

Replaying recorded
actions in sim cell
matrix

↓

Providing inputs to
the simulated cells to
vary replay

↓

Picking parameters
from recording to use
for training scenarios

**Figure 13**

## EUROPEAN SEARCH REPORT

European Patent
Office

**Application Number**

EP 95 30 8657

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-5 374 191 (HERMAN ET AL.)<br><br>* column 3, line 14 - column 4, line 9; column 7, line 38 - column 10, line 3; figures 1, 2 *<br>--- | 1-14, 20-27, 29-32 | G09B9/00 |
| A | EP-A-0 561 534 (AAI CORPORATION)<br>* column 8, line 10 - column 9, line 34; figures 1, 8 *<br>--- | 24,28 | |
| D,A | US-A-4 861 270 (JAMES ERNST ET AL.)<br><br>* abstract; column 2, line 10 - column 3, line 20; figure 1 *<br>----- | 1-3, 20-22, 24,27, 29-32 | |
| | | | **TECHNICAL FIELDS SEARCHED** (Int.Cl.6)<br><br>G09B |

The present search report has been drawn up for all claims

| Place of search | Date of completion of the search | Examiner |
|---|---|---|
| BERLIN | 13 February 1996 | Beitner, M |

EPO FORM 1503 03.82 (P04C01)